# EUROPÄISCHE PATENTSCHRIFT

(11) **EP 4 356 156 B1**
(45) Veröffentlichungstag und Bekanntmachung des Hinweises auf die Patenterteilung: **22.07.2026**
(21) Anmeldenummer: 22730462.3
(22) Anmeldetag: 24.05.2022
(51) Int. Cl.: G01S 7/02, G01S 7/481, G01S 13/931, G01S 17/931, B60R 11/00, G01S 13/86, B60R 11/04

(54) **FAHRZEUG-DACHMODUL MIT EINER VERSTELLKINEMATIK ZUM VERSTAUEN UND HERAUSFAHREN EINES UMFELDSENSORS**
VEHICLE ROOF MODULE WITH ADJUSTMENT KINEMATICS FOR STOWING AND EXTENDING A PERIMETER SENSOR
MODULE DE TOIT DE VÉHICULE À CINÉMATIQUE DE RÉGLAGE PERMETTANT LE RANGEMENT ET L'EXTENSION D'UN CAPTEUR PÉRIMÉTRIQUE

(30) Priorität: 14.06.2021 WO PCT/EP2021/065951
(43) Veröffentlichungstag der Anmeldung: 24.04.2024
(73) Patentinhaber: Webasto SE, 82131 Stockdorf (DE)
(72) Erfinder: HÜLSEN, Michael, 82131 Stockdorf (DE); LANGLAIS, Cédric, 82131 Stockdorf (DE); EHRMANN, Maximilian, 82131 Stockdorf (DE); LEHOTSKY, Juraj, 82131 Stockdorf (DE); WÜLLRICH, Heinrich, 82131 Stockdorf (DE); PODOLSKI, Thomas, 82131 Stockdorf (DE); LINNER, Nikolaus, 82131 Stockdorf (DE)
(74) Vertreter: advotec.
(86) Internationale Anmeldenummer: PCT/EP2022/064106
(87) Internationale Veröffentlichungsnummer: WO 2022/263129

(56) Entgegenhaltungen:
- CN-B- 106 985 681
- DE-A1- 102019 101 861
- DE-A1- 102019 125 674
- DE-A1- 102020 102 643
- US-A- 4 941 718
- US-A1- 2017 356 769

## Beschreibung

Die Erfindung betrifft ein Dachmodul zur Bildung eines Fahrzeugdachs an einem Kraftfahrzeug nach dem Oberbegriff des Anspruchs 1.

Gattungsgemäße Dachmodule finden im Fahrzeugbau umfassend Verwendung, da diese Dachmodule als separate Funktionsmodule vorgefertigt und bei der Montage des Fahrzeuges an das Montageband geliefert werden können. Das Dachmodul bildet an seiner Außenfläche zumindest bereichsweise eine Dachhaut des Fahrzeugdachs, die ein Eindringen von Feuchtigkeit bzw. Luftströmung in den Fahrzeuginnenraum verhindert. Die Dachhaut wird von einem oder mehreren Flächenbauteilen gebildet, die aus einem stabilen Material, beispielsweise lackiertem Blech oder lackiertem bzw. durchgefärbtem Kunststoff, gefertigt sein können. Bei dem Dachmodul kann es sich um ein Teil eines starren Fahrzeugdachs oder um ein Teil einer öffenbaren Dachbaugruppe handeln.

Ferner richtet sich die Entwicklung im Fahrzeugbau immer stärker auf autonom bzw. teilautonom fahrende Kraftfahrzeuge. Um der Fahrzeugsteuerung ein autonomes bzw. teilautonomes Steuern des Kraftfahrzeuges zu ermöglichen, wird eine Vielzahl von Umfeldsensoren (z. B. Lidar-Sensoren, Radar-Sensoren, (Multi-)Kameras etc. mitsamt weiteren (elektrischen) Komponenten) eingesetzt, die bspw. in das Dachmodul integriert sind, die Umgebung rund um das Kraftfahrzeug erfassen und aus den erfassten Umgebungsdaten bspw. eine jeweilige Verkehrssituation ermitteln. Dachmodule, welche mit einer Vielzahl von Umfeldsensoren ausgestattet sind, sind auch als Roof Sensor Modules (RSM) bekannt. Die bekannten Umfeldsensoren senden bzw. empfangen dazu elektromagnetische Signale, beispielsweise Laserstrahlen oder Radarstrahlen, wobei durch eine Signalauswertung ein Datenmodell der Fahrzeugumgebung generiert und für die Fahrzeugsteuerung genutzt werden kann.

Die Umfeldsensoren zur Überwachung und Erfassung der Fahrzeugumgebung sind zumeist am Fahrzeugdach befestigt, da das Fahrzeugdach in der Regel die höchste Erhebung eines Fahrzeuges ist, von der aus die Fahrzeugumgebung gut einsehbar ist. Die Umfeldsensoren sind bisher zumeist als Aufsatz des betreffenden Fahrzeugdachs ausgebildet. Dies führt zu einem optischen Erscheinungsbild, das in der Regel nicht den Kundenanforderungen entspricht. Zudem besteht das Risiko, dass ein Durchsichtsbereich, durch den der Umfeldsensor das Fahrzeugumfeld erfasst, aufgrund von Umwelt- und Wettereinflüssen verschmutzt bzw. für den Umfeldsensor undurchsichtig oder gar (z. B. durch Hagelschlag) beschädigt wird.

Aus diesem Grund ist es wünschenswert, eine Ein- und Ausfahrbarkeit des Umfeldsensors zu gewährleisten, um bspw. ästhetischen Aspekten gerecht zu werden und den Umfeldsensor zusätzlich in einem nicht aktiven Zustand vor Umgebungseinflüssen zu schützen. Aufgrund unterschiedlichster Fahrzeugtypen und Designanforderungen besteht die Problematik, dass ein zur Verfügung stehender Bauraum für die zugehörige Verfahrmechanik aufgrund der restlichen an das Dachmodul gestellten Anforderungen (z. B. Vorsehen eines Schiebe- oder Panoramadachs) nur gering ist und sich zumeist auf einen äußeren Randbereich des Dachmoduls beschränkt. Daher ist es wünschenswert, je nach Bauraumanforderung eine geeignete, platzsparende Verfahrmechanik bereitzustellen. Außerdem kommt es bei bekannten Verfahrmechaniken über die Lebenszeit oftmals zu Abnutzungserscheinungen, die eine Schwergängigkeit hervorrufen können. Deshalb soll die bereitgestellte Verfahrmechanik darüber hinaus hinsichtlich ihres Abnutzungsverhaltens optimiert sein.

Die Druckschriften US 2017/356769 A1, DE 10 2019 125674 A1 und DE 10 2019 101861 A1 offenbaren den entsprechenden Stand der Technik gemäß dem Oberbegriff von Anspruch 1.

Der Erfindung liegt daher die Aufgabe zugrunde, ein Dachmodul vorzuschlagen, das die oben beschriebenen Anforderungen erfüllt.

Diese Aufgabe ist durch ein Dachmodul nach der Lehre des Anspruchs 1 gelöst. Vorteilhafte Ausführungsformen der Erfindung sind Gegenstand der Unteransprüche.

Das erfindungsgemäße Dachmodul zur Bildung eines Fahrzeugdachs an einem Kraftfahrzeug umfasst ein Flächenbauteil, dessen Außenoberfläche zumindest bereichsweise die Dachhaut des Fahrzeugdachs bildet und als eine äußere Dichtfläche des Dachmoduls fungiert. Das Dachmodul umfasst mindestens einen Umfeldsensor, mittels dessen in einem autonomen oder teilautonomen Fahrbetrieb des Kraftfahrzeuges ein Fahrzeugumfeld erfassbar ist. Das erfindungsgemäße Dachmodul ist dadurch gekennzeichnet, dass es eine Verstellkinematik mit einem Antrieb umfasst, die dazu ausgebildet ist, den Umfeldsensor von einer eingefahrenen Stellung in eine ausgefahrene Stellung, in der der Umfeldsensor über die Dachhaut hervorsteht, um das Fahrzeugumfeld zu erfassen, zu verstellen und den Umfeldsensor zumindest in der ausgefahrenen Stellung derart zu fixieren, dass der Umfeldsensor gegenüber einer äußeren Kraft unbeweglich ist.

Bei der äußeren Kraft kann es sich bspw. um eine Windkraft oder eine ähnliche Belastung handeln, die in dem ausgefahrenen Zustand des mindestens einen Umfeldsensors von außerhalb des Fahrzeuges auf diesen einwirkt. Eine auf den Umfeldsensor wirkende Kraft kann bspw. verursachen, dass der Umfeldsensor um mindestens einen Aufhängungspunkt an dem Dachmodul (bzw. an einer Rahmenkonstruktion des Dachmoduls) ein Drehmoment erfährt, das den Umfeldsensor in Richtung der eingefahrenen Stellung zurückdrückt. Ein solches Drehmoment wird allerdings mittels der erfindungsgemäßen Verstellkinematik derart über eine oder mehrere Komponenten abgeleitet, dass der Umfeldsensor in der ausgefahrenen Stellung fixiert bleibt, somit also nicht zurück in Richtung der eingefahrenen Stellung gedrückt werden kann. Mit anderen Worten besteht also ein Vorteil der erfindungsgemäßen Verstellkinematik darin, dass sie zumindest in dem ausgefahrenen Zustand eine bestmögliche Fixierung der Endlage (Endstellung) ermöglicht. Durch diese Fixierung ist es möglich, verschiedene einzuhaltende (Bewegungs-)Toleranzen des Umfeldsensors einzuhalten sowie einen Sensorblickwinkel im Betrieb des Umfeldsensors (dauerhaft) zu stabilisieren. Zudem bietet die erfindungsgemäße Fixierung des Umfeldsensors zumindest hinsichtlich der ausgefahrenen Stellung einen Schutz von Beschädigungen (z. B. durch ein plötzliches Einklappen des Sensors aufgrund einer äußeren Krafteinwirkung). Des Weiteren werden Vibrationen, die zu Störsignalen in der Auswertung der Umfeldsensorsignale führen können, vermieden sowie aerodynamische Einflüsse bei der Auswertung vernachlässigbar. Unter "mindestens ein Umfeldsensor" wird verstanden, dass das Dachmodul einen oder mehrere Umfeldsensoren umfassen kann.

Bei der erfindungsgemäßen Verstellkinematik entsteht ein geringeres Maß an Abnutzung, da ein Verstellen des Umfeldsensors vorzugsweise durch mindestens eine, vorzugsweise mehrere miteinander verbundene Drehbewegung(en) um mindestens einen Drehpunkt erfolgt. Derartige Drehbewegungen sind gegenüber einer Linearverstellung auch schmutzunempfindlicher, was insbesondere hinsichtlich einer erreichbaren Lebenszeit vorteilhaft ist. Ebenfalls ist bei der erfindungsgemäßen Verstellkinematik das Risiko einer ungewünschten Geräuschentwicklung, wie beispielsweise eines Quietschens oder eines anderen klemmenden Geräuschs verringert. Eine derartige Geräuschentwicklung entsteht oftmals aufgrund von Abnutzungserscheinungen. Insgesamt kann erfindungsgemäß eine stabile und robuste Verstellkinematik bereitgestellt werden.

Das Dachmodul nach der Erfindung kann eine Baueinheit bilden, in der Einrichtungen zum autonomen oder teilautonomen, durch Fahrassistenzsysteme unterstützten Fahren integriert sind und die auf Seiten eines Fahrzeugherstellers als Einheit auf einen Fahrzeugrohbau aufsetzbar ist. Ferner kann das Dachmodul nach der Erfindung als reines Festdach oder auch als Dach mitsamt Dachöffnungssystem ausgebildet sein. Zudem kann das Dachmodul zur Nutzung bei einem Personenkraftwagen oder bei einem Nutzfahrzeug ausgelegt sein. Das Dachmodul kann vorzugsweise als Baueinheit in Form eines Dachsensormoduls (Roof Sensor Module (RSM)) bereitgestellt sein, in der die Umfeldsensoren vorgesehen sind, um als zulieferbare Baueinheit in einen Dachrahmen einer Fahrzeugkarosserie eingesetzt zu werden.

Grundsätzlich kann der Umfeldsensor nach der Erfindung in vielfältiger Weise ausgebildet sein und insbesondere einen Lidar-Sensor, einen Radar-Sensor, einen optischen Sensor, wie eine Kamera, und/oder dergleichen umfassen. Lidar-Sensoren arbeiten beispielsweise in einem Wellenlängenbereich von 905 nm oder auch von etwa 1550 nm. Der Werkstoff der Dachhaut sollte in einem Durchsichtsbereich, durch welchen der Umfeldsensor während der Erfassung des Fahrzeugumfeldes hindurchblickt, für den von dem Umfeldsensor genutzten Wellenlängenbereich transparent sein und materialseitig in Abhängigkeit der von dem Umfeldsensor genutzten Wellenlänge(n) ausgewählt sein.

Erfindungsgemäß weist die Verstellkinematik einen Führungshebel auf, der vorzugsweise an seinem einen Ende (in einer Längserstreckung des Führungshebels betrachtet) drehbar mit dem Dachmodul (in Form eines Festlagers) verbunden ist.

Erfindungsgemäß umfasst die Verstellkinematik einen Schlitten, der entlang einer Antriebsachse (d. h. translatorisch) mittels des Antriebes beweglich ist und der eine Kulissenbahn umfasst, in der ein Führungsstift (vorzugsweise gleitend) beweglich ist, mittels dessen Bewegung entlang der Kulissenbahn (d. h. translatorisch) der Umfeldsensor von der eingefahrenen Stellung in die ausgefahrene Stellung verstellbar ist. Der Schlitten ist vorzugsweise auf einer Linearbahn (z. B. ähnlich einer Schiene) geführt. Bei der Kulissenbahn handelt es sich vorzugsweise um einen vordefinierten Schlitz in dem Schlitten, durch dessen Form und Länge ein gewünschter Bewegungsablauf abgebildet werden kann. Besonders bevorzugt ist es, wenn die Kulissenbahn zwei zueinander im Wesentlichen parallele Bahnenabschnitte und einen rampenförmigen Bahnabschnitt (mit einem rampenförmigen Verlauf) umfasst. Auch andere Formen der Kulissenbahnen sind grundsätzlich möglich. Bevorzugt ist es auch, wenn die beiden parallelen Bahnenabschnitte (wovon vorzugsweise einer an einem unteren Ende, der andere an einem oberen Ende des rampenförmigen Bahnabschnittes angeordnet ist) jeweils einen Anschlag für den Führungsstift ausbilden. Ein Vorteil einer Kulissensteuerung besteht darin, dass hierdurch ein geschwindigkeitsoptimiertes Verstellen des Umfeldsensors möglich ist, jedoch zugleich ein geringer Bauraum für die Verstellmechanik benötigt wird. Durch den ersten Anschlag (an einem unteren Ende der Kulissenbahn) ist der Umfeldsensor (in Anschlagstellung des Führungsstiftes) in der eingefahrenen Stellung fixiert. Durch den zweiten Anschlag (an einem oberen Ende der Kulissenbahn) ist der Umfeldsensor (in Anschlagstellung des Führungsstiftes) in der ausgefahrenen Stellung fixiert. Der Führungsstift ist vorzugsweise gegen ein Herausfallen aus der Kulissenbahn (bspw. mittels eines überstehenden Wulstes (ähnlich eines Niets) oder mittels eines Splintes) gesichert.

In einer bevorzugten Ausführungsform umfasst der Antrieb einen Motor mit einem Antriebsritzel, an dem bspw. ein Steigungskabel angeordnet ist, das mit dem Schlitten verbunden ist. Bei dem Motor handelt es sich vorzugsweise um einen Elektromotor. Durch das Vorsehen des Steigungskabels, durch das eine (Dreh-)Bewegung des Motors über das Ritzel in eine Linearbewegung des Schlittens umgesetzt wird, kann ein hohes Maß an Designfreiheit gewährleistet werden, da der Antrieb nahezu beliebig frei seitlich neben dem Umfeldsensor in einem sich in Fahrzeugbreitenrichtung erstreckenden Bauraum des Dachmoduls platziert werden kann. Besonders bevorzugt ist der Antrieb dazu ausgebildet, mittels des Steigungskabels den Schlitten entlang einer im Wesentlichen linearen Bahn hin und her zu verstellen. Der Schlitten wird mittels des Steigungskabels also vorzugsweise im Wesentlichen entlang einer Fahrzeugquerrichtung (im Falle, dass der Umfeldsensor mitsamt dem Antrieb in der Fahrzeugquerrichtung angeordnet ist) oder einer Fahrzeuglängsrichtung (im Falle, dass der Umfeldsensor mitsamt dem Antrieb in der Fahrzeuglängsrichtung angeordnet ist) bewegt. Unter der Formulierung "im Wesentlichen lineare Bahn" wird verstanden, dass der Schlitten vorzugsweise lediglich eine Beweglichkeit entlang einer Bewegungsachse (d. h. translatorisch) (z. B. parallel zu der Fahrzeugbreitenrichtung) aufweist, jedoch bezüglich der anderen beiden Bewegungsachsen in seiner Bewegung (bis auf die Bereitstellung eines konstruktiv notwendigen Spiels) beschränkt ist (also nur einen Bewegungsfreiheitsgrad aufweist).

In einer bevorzugten Ausführungsform ist der Führungsstift fix an dem Führungshebel angeordnet, und der Führungshebel ist vorzugsweise mit seinem einen Ende drehbar mit dem Dachmodul verbunden. Das eine Ende des Führungshebels ist in dieser Ausführungsform also vorzugsweise in Form eines Festlagers mit dem Dachmodul oder einer Komponente des an dem Dachmodul befestigten Antriebes verbunden. Der Antrieb ist in dieser Ausführungsform vorzugsweise wieder als Schlitten mitsamt der vorstehend beschriebenen Kulissenbahn ausgeführt. Der Schlitten bewegt sich vorzugsweise entlang einer Führungsbahn. An der Führungsbahn kann bspw. ein Profil vorgesehen sein, an dem der Führungshebel in Form eines Festlagers einseitig drehbar gelagert ist. Der Führungsstift ist in dieser Ausführungsform nicht fix (unbeweglich) an dem Umfeldsensor befestigt, sondern (vorzugsweise unmittelbar) an dem Führungshebel, bspw. in einem in einer Längserstreckung des Führungshebels betrachtet mittigen Bereich des Führungshebels. Der Führungsstift ist ferner beweglich in der Kulissenbahn geführt, so dass eine Bewegung des Schlittens entlang der Führungsbahn, wie vorstehend beschrieben, auf den Führungsstift übertragbar ist. Diese Bewegung kann aufgrund der Fixierung des Führungsstiftes relativ zu dem Führungshebel auf diesen übertragen werden. Somit kann der Führungshebel, eingeleitet durch den Führungsstift, eine Drehung um die Drehachse des Festlagers ausführen.

In einer bevorzugten Ausführungsform bilden der Führungshebel und mindestens ein Kreuzhebel eine Kreuzhebelanordnung aus, wobei zwei Hebelenden der Kreuzhebelanordnung mit dem Umfeldsensor (bzw. einem Gehäuse des Umfeldsensors) drehbar verbunden sind. Die beiden Hebelenden, die mit dem Umfeldsensor (bzw. einem Gehäuse des Umfeldsensors) verbunden sind, dienen vorzugsweise dazu, den Umfeldsensor mittels zweier vorzugsweise voneinander beabstandeter Angelpunkte zumindest gegenüber einer Vertikalen und/oder einer Horizontalen zu stabilisieren. In dieser Ausführungsform vollführt der Umfeldsensor vorzugsweise während der Ein- und/oder Ausfahrbewegung eine im Wesentlichen vertikale Bewegung. Vorzugsweise findet somit keine Drehung des Umfeldsensors um eine Drehachse statt. Die Kreuzhebelanordnung umfasst vorzugsweise mindestens vier Hebel (die Führungshebel sowie drei Kreuzhebel). Der Führungshebel und ein erster Kreuzhebel sind vorzugsweise in einem bezogen auf ihre Längserstreckung jeweils mittigen Bereich, drehbar miteinander verbunden und überkreuzen sich derart. Ein bevorzugter zweiter Kreuzhebel ist vorzugsweise mit einem Ende des ersten Kreuzhebels verbunden. Ein bevorzugter dritter Kreuzhebel ist vorzugsweise mit einem Ende des Führungshebels verbunden, das dem festgelagerten Ende des Führungshebels gegenüberliegt. Der zweite und der dritte Kreuzhebel sind vorzugsweise in einem bezogen auf ihre Längserstreckung jeweils mittigen Bereich drehbar miteinander verbunden und überkreuzen sich derart. Der bevorzugte zweite Kreuzhebel ist vorzugsweise an einem anderen Ende mit dem Umfeldsensor drehbar verbunden. Der bevorzugte dritte Kreuzhebel ist vorzugsweise an einem anderen Ende mit dem Umfeldsensor drehbar verbunden.

In einer bevorzugten Ausführungsform umfasst die Verstellkinematik einen Leithebel, einen ersten Stabilisierungshebel und einen zweiten Stabilisierungshebel. Der Leithebel ist vorzugsweise mit dem ersten und dem zweiten Stabilisierungshebel drehbar verbunden. Der Führungshebel ist vorzugsweise mit dem ersten Stabilisierungshebel drehbar verbunden. Der erste und der zweite Stabilisierungshebel sind vorzugsweise mit dem Umfeldsensor (bzw. einem Gehäuse des Umfeldsensors) drehbar verbunden. Der erste und der zweite Stabilisierungshebel bilden somit, vorzugsweise voneinander beabstandete, Angelpunkte an dem Umfeldsensor (bzw. einem Gehäuse des Umfeldsensors) aus, so dass eine Bewegung des Umfeldsensors gegenüber mindestens zwei Bewegungsachsen mittels des ersten und des zweiten Stabilisierungshebels eingeschränkt ist. Diese Ausführungsform bildet somit vorzugsweise eine 7-Gelenkanordnung aus, mittels derer der Verstellmechanismus des Umfeldsensors realisiert ist. In dieser Ausführungsform dient vorzugsweise der vorstehend beschriebene Schlitten mitsamt Kulissenbahn als Antrieb. Der Umfeldsensor ist in dieser Ausführungsform mittels der Bahnendabschnitte der Kulissenbahn in der eingefahrenen Stellung und in der ausgefahrenen Stellung fixiert, so dass der Umfeldsensor gegenüber einer äußeren Kraft jeweils unbeweglich ist und lediglich mittels einer Betätigung des Antriebes verstellt werden kann.

In einer bevorzugten Ausführungsform ist der Führungsstift fix an dem Umfeldsensor bzw. an einem Gehäuse des Umfeldsensors angeordnet. Es ist bevorzugt, dass der Umfeldsensor in dieser Ausgestaltung, z. B. mittels einer Aufhängung an einem Gehäuse des Umfeldsensors, drehbar an dem Dachmodul (bzw. einer Rahmenstruktur des Dachmoduls) gelagert ist. Der Umfeldsensor ist vorzugsweise lediglich um eine einzige Drehachse drehbar und ansonsten relativ zu dem Dachmodul fixiert. Durch diese Ausgestaltung ist es möglich, bspw. eine Relativbewegung des Schlittens entlang der (linearen) Bewegungsachse durch ein Gleiten des Führungsstiftes innerhalb der Kulissenbahn in eine Drehung des Umfeldsensors um die Drehachse zu übersetzen, da der Führungsstift relativ zu dem Umfeldsensor unbeweglich, z. B. an einem Gehäuse des Umfeldsensors fixiert ist. Der Führungsstift gleitet daher von dem ersten (unteren) Anschlag entlang der rampenförmigen Kulissenbahn in Richtung des zweiten Anschlages und ändert dabei in einer Vertikalrichtung betrachtet seinen Relativabstand gegenüber der hinsichtlich des Dachmoduls fixierten Bewegungsachse des Schlittens, bis der Führungsstift an dem zweiten Anschlag anschlägt und die ausgefahrene Stellung des Umfeldsensors erreicht ist.

In einer bevorzugten Ausführungsform umfasst die Verstellkinematik einen Spindelmutterantrieb mit einer entlang einer Antriebsachse beweglichen Spindelmutter, an der mindestens ein Verkipphebel beweglich angeordnet ist, mittels dessen der Umfeldsensor von der eingefahrenen in die ausgefahrene Stellung verstellbar ist. Der Spindelantrieb bietet eine Alternative zu einer Bewegungseinleitung mittels des oben beschriebenen Schlittens, durch die ebenfalls eine Linearbewegung einer Spindelmutter auf einer Spindelstange entlang der Antriebsachse in eine (komplexe) translatorische und/oder rotatorische Bewegung des Umfeldsensors übertragbar ist. Der Verkipphebel ist vorzugsweise um eine einzige Drehachse drehbar an der Spindelmutter fixiert. Die Spindelmutter dreht sich während der Linearbewegung entlang der Antriebsachse relativ zu der Spindelstange vorzugsweise nicht um die Antriebsachse.

In einer bevorzugten Ausführungsform umfasst die Verstellkinematik eine Führungsschiene mit einer Führungsnut, in der ein an dem Umfeldsensor fix angeordneter erster Gleitstift beweglich ist. Besonders bevorzugt hat die Führungsnut einen im Wesentlichen geraden Verlauf. Unter "im Wesentlichen gerade" wird verstanden, dass die Führungsnut entlang ihrer Längserstreckung vorwiegend gerade verläuft, jedoch in einzelnen Teilabschnitten der Führungsnut auch eine leichte Abwinkelung von dem geraden Verlauf aufweisen kann. Die Führungsschiene dient insbesondere dazu, den Umfeldsensor während der Bewegung von der eingefahrenen Stellung in die ausgefahrene Stellung in seiner Beweglichkeit hinsichtlich eines Freiheitsgrades (z. B. einer Verkippung um eine Achse parallel zu einer Fahrzeuglängsrichtung) einzuschränken. Hierzu ist es besonders bevorzugt, wenn an dem Umfeldsensor ein zweiter Gleitstift fix angeordnet und in der Führungsnut beweglich gehalten ist. Der zweite Gleitstift ist vorzugsweise von dem ersten Gleitstift beabstandet an dem Umfeldsensor (bzw. an einem Gehäuse des Umfeldsensors) fixiert. Hierdurch wird die Bewegungsfreiheit des Umfeldsensors stabilisiert und bspw. ein unerwünschtes Verkippen verhindert.

In einer bevorzugten Ausführungsform ist der mindestens eine Verkipphebel in der ausgefahrenen Stellung des Umfeldsensors hinsichtlich seiner Längserstreckung im Wesentlichen orthogonal (d. h. ± 10 % Abweichung von 90°) zu der Antriebsachse ausgerichtet und fixiert derart den Umfeldsensor in der ausgefahrenen Stellung. In der eingefahrenen Stellung des Umfeldsensors ist der Verkipphebel gemäß dieser Ausführungsform hingegen hinsichtlich seiner Längserstreckung vorzugsweise im Wesentlichen parallel zu der Antriebsachse ausgerichtet. Der Verkipphebel kann einseitig vorzugsweise drehbar mit der Spindelmutter verbunden sein. Zudem kann der Verkipphebel vorzugsweise mit dem Führungshebel (vorzugsweise unmittelbar) verbunden sein, der einseitig an dem Dachmodul (bzw. einer Dachrahmenstruktur des Dachmoduls) in Form eines Festlagers drehbar gelagert ist. Vorzugsweise ist ein anderes Ende des Führungshebels an dem Umfeldsensor (bzw. an dessen Gehäuse) drehbar gelagert. Eine Bewegung der Spindelmutter entlang der Spindelachse wird mittels des Verkipphebels auf den Führungshebel übertragen. Der Verkipphebel verkippt ausgehend von einer eingefahrenen Stellung des Umfeldsensors, in der der Verkipphebel vorzugsweise parallel zu der Antriebsachse ausgerichtet ist, um eine Drehachse. Diese Verkippung wird vorzugsweise auf den Führungshebel übertragen. Dadurch, dass dieser einseitig in Form eines Festlagers an dem Dachmodul fixiert ist, wird die Verkippung des Verkipphebels über den Führungshebel auf den Umfeldsensor übertragen, und dieser wird von der eingefahrenen Stellung in die ausgefahrene Stellung verstellt. Wird in der ausgefahrenen Stellung des Umfeldsensors auf diesen eine äußere Kraft ausgeübt, wird diese aufgrund der orthogonalen Stellung des Verkipphebels zu der Antriebsachse derart abgeleitet, dass der Umfeldsensor in der ausgefahrenen Stellung fixiert bleibt. In der eingefahrenen Stellung schlägt die Spindelmutter vorzugsweise gegen einen Anschlag des Spindelantriebes an, so dass der Umfeldsensor zumindest unidirektional entlang der Antriebsachse in der eingefahrenen Stellung fixiert ist und durch ein (äußere) Kraft nicht weiter in Richtung der eingefahrenen Stellung bewegt werden kann. Die Spindelmutter befindet sich in der eingefahrenen Stellung des Umfeldsensors also vorzugsweise entlang der Antriebsachse unidirektional in der Anschlagstellung.

In einer bevorzugten Ausführungsform ist der mindestens eine Verkipphebel unmittelbar oder mittelbar mit dem Führungshebel drehbar verbunden. Der Führungshebel kann mit dem Verkipphebel bspw. auch über einen oder mehrere weitere Hebel mittelbar verbunden sein, so dass eine Wirkverbindung besteht, durch die eine Bewegung effektiv übertragbar ist.

In einer bevorzugten Ausführungsform ist der Verkipphebel mit einem zweiten Verriegelungshebelelement drehbar verbunden. In dieser Ausführungsform erfolgt die Fixierung des Umfeldsensors in der eingefahrenen Stellung und in der ausgefahrenen Stellung mithin mittels der Verriegelungshebelanordnung bzw. mittels des ersten und des zweiten Verriegelungshebelelements. Besonders bevorzugt umfasst die Verstellkinematik in dieser Ausführungsform zusätzlich zu der Verriegelungshebelanordnung ein weiteres, insbesondere federndes und/oder kraftaufbringendes Element, beispielsweis eine Dichtungsanordnung an dem Gehäuse. In einer bevorzugten Ausführungsform umfasst die Verriegelungshebelanordnung mindestens zwei Verriegelungshebelelemente, mittels derer der Umfeldsensor in der eingefahrenen Stellung und in der ausgefahrenen Stellung fixierbar ist, so dass der Umfeldsensor jeweils gegenüber einer äußeren Kraft unbeweglich ist. Die Verriegelungshebelanordnung ändert also vorzugsweise eine Hebelstellung der mindestens zwei Verriegelungshebelelemente bzw. Hebelelement zusammen mit dem mindestens einen Verstellhebel derart, dass eine Fixierung des Umfeldsensors sowohl in der eingefahrenen Stellung als auch in der ausgefahrenen Stellung möglich ist. Hierzu werden die mindestens zwei Verriegelungshebelelemente der Verriegelungshebelanordnung vorzugsweise in der ausgefahrenen Stellung des Umfeldsensors in eine Strecklage bzw. Totpunktlage (also die maximal ausgefahrene Endlage) gebracht, in der sich mehrere Gelenkpunkte der Verriegelungshebelanordnung entlang einer Geraden befinden, so dass eine von außen auf den Umfeldsensor einwirkende Kraft über die Verriegelungshebelanordnung vorzugsweise orthogonal zu der Antriebsachse des Antriebes in das Dachmodul abgeleitet wird und somit keine Bewegung des Umfeldsensors hervorgerufen wird. Mit anderen Worten ist es durch die Verriegelungshebelanordnung möglich, über die Totpunklage hinauszufahren, um ein Entriegeln, das in einer Vortotpunktlage durch äußere Krafteinwirkung passieren könnte, zu verhindern. Insbesondere wird durch die bevorzugte Dichtungsanordnung ein Zurückschwenken aus der Strecklage durch äußere Krafteinwirkung verhindert, da durch die Dichtungsanordnung bevorzugt eine Kraft, insbesondere eine Art Rückstellkraft auf die Verstellkinematik aufgebracht wird. Besonders bevorzugt ist die Dichtungsanordnung in einem Übertotpunktraum vorgesehen. In dem Übertotpunktraum ist vorzugsweise mindestens ein Endanschlag vorgesehen, gegen den die Dichtungsanordnung Verriegelungshebelanordnung der Verstellkinematik drückt. Hierdurch kann bevorzugt die Verstellkinematik eine definierte Endlage einnehmen. In einer bevorzugten Ausführungsform umfasst der Verkipphebel einen ersten und einen zweiten Verkipphebelarm. Der erste Verkipphebelarm ist vorzugsweise um eine Drehachse drehbar mit der Spindelmutter verbunden. Der erste Verkipphebelarm ist vorzugsweise relativ zu dem zweiten Verkipphebelarm um eine Drehachse drehbar mit diesem verbunden.

Der zweite Verkipphebelarm ist vorzugsweise drehbar mit der Verriegelungshebelanordnung verbunden bzw. bildet selbst vorzugsweise eines der drei Verriegelungshebelelemente der Verriegelungshebelanordnung.

In einer bevorzugten Ausführungsform ist der Führungshebel an seinem einen Ende, vorzugsweise in Form eines Festlagers, um eine Drehachse drehbar mit dem Dachmodul verbunden. An seinem anderen Ende ist der Führungshebel vorzugsweise um eine Drehachse drehbar mit dem Umfeldsensor (bzw. einem Gehäuse des Umfeldsensors) verbunden. Der Führungshebel ist vorzugsweise mit der restlichen Hebelanordnung dieser Ausführungsform lediglich über einen Verbindungshebel gekoppelt, interagiert mit dieser also lediglich mittelbar. Der Führungshebel dient insbesondere zusammen mit dem Verbindungshebel dazu, den Umfeldsensor nach (indirekter) Krafteinleitung durch die Verkipphebel von der eingefahrenen Stellung in die ausgefahrene Stellung zu verstellen. Mittels des Führungshebels vollführt der Umfeldsensor also eine Bewegung in der Vertikalrichtung. Besonders bevorzugt ist der Führungshebel über den Verbindungshebel drehbar mit der Verriegelungshebelanordnung verbunden. Vorzugsweise greift der Verbindungshebel, entlang einer Längserstreckung des Führungshebels betrachtet, in einem ersten Drittel (in der Längsrichtung ausgehend von einem Verbindungspunkt des Führungshebels mit dem Dachmodul) an dem Führungshebel an. Der Verbindungshebel dient vorzugsweise als Verbindungselement zu einem Verriegelungshebelelement der Verriegelungshebelanordnung. Über dieses Verriegelungshebelelement steht der Verbindungshebel wiederrum mit einem der Verkipphebelarme in Wirkverbindung.

In einer bevorzugten Ausführungsform umfasst die Verstellkinematik vorzugsweise einen ersten Stabilisierungshebel, einen zweiten Stabilisierungshebel und/oder einen dritten Stabilisierungshebel. Der erste Stabilisierungshebel ist vorzugsweise an seinem einen Ende drehbar, vorzugsweise in Form eines Festlagers, mit dem Dachmodul (bzw. einer Rahmenstruktur des Dachmoduls) verbunden. An seinem anderen Ende ist der erste Stabilisierungshebel vorzugsweise (um eine Drehachse) drehbar mit dem dritten Stabilisierungshebel verbunden. Der zweite Stabilisierungshebel ist an seinem einen Ende, vorzugsweise in Form eines Festlagers, drehbar mit dem Dachmodul (bzw. einer Rahmenstruktur des Dachmoduls) verbunden. An seinem anderen Ende ist der zweite Stabilisierungshebel drehbar mit dem dritten Stabilisierungshebel verbunden. Der dritte Stabilisierungshebel ist vorzugsweise an seinem einen Ende drehbar mit dem zweiten Stabilisierungshebel verbunden. An seinem anderen Ende ist der dritte Stabilisierungshebel vorzugsweise drehbar mit dem Umfeldsensor verbunden. Diese Hebelanordnung bildet zusammen mit dem Leithebel, dem mindestens einen Verkipphebel sowie der Verriegelungshebelanordnung vorzugsweise ein 7-Gelenk aus, mittels dessen der Verstellmechanismus des Umfeldsensors realisiert ist. Durch diese 7-Gelenkanordnung kann ein komplexer Bewegungsablauf des Umfeldsensors platz- und bauraumsparend realisiert werden.

In einer bevorzugten Ausführungsform ist die Verriegelungshebelanordnung über eine Festlagerung drehbar mit dem Dachmodul und/oder einem Dachmodulrahmen und/oder mit einem an dem Dachmodul oder dem Dachmodulrahmen befestigten Trägerbauteil verbunden. Der Verkipphebel ist an seinem einen Ende drehbar mit der Spindelmutter verbunden und an seinem gegenüberliegenden Ende drehbar mit einem zweiten Verriegelungshebelelement der Verriegelungshebelanordnung verbunden. Das zweite Verriegelungshebelelement der Verriegelungshebelanordnung ist drehbar mit einem Ende eines ersten Verriegelungshebelelements verbunden, das an seinem gegenüberliegenden Ende drehbar mit dem Umfeldsensor und/oder einem Gehäuse, in dem der Umfeldsensor angeordnet ist, verbunden ist. Besonders bevorzugt wird der Umfeldsensor erfindungsgemäß über ein (in einer Blickrichtung des Umfeldsensors betrachtet) insbesondere rechts- und linksseitig von dem Umfeldsensor angebrachtes Hauptlenkerpaar geführt zwischen der eingefahrenen Stellung und der ausgefahrenen Stellung bewegt. Der Umfeldsensor ist dabei vorzugsweise in einem Gehäuse bzw. Sensorgehäuse angeordnet, das an dem Flächenbauteil und/oder einem Dachmodulrahmen oder einer sonstigen Trägerstruktur des Dachmoduls, insbesondere über den Führungshebel drehbar gelagert ist. Der Umfeldsensor vollführt vorzugsweise eine Drehbewegung um eine Drehachse, wenn er zwischen der eingefahrenen Stellung und der ausgefahrenen Stellung verstellt wird. Besonderes bevorzugt verriegeln die beiden Hauptlenker, die erfindungsgemäß eine Vielzahl von Hebeln umfassen können, den Umfeldsensor jeweils in den beiden Endlagen, so dass dieser gegenüber einer äußeren Kraft nahezu unbeweglich ist. Es sei erwähnt, dass in einigen Ausführungen eine minimale Bewegungen zwischen der Übertotpunktlage und der Strecklage, bspw. durch eine äußere Krafteinwirkung möglich ist. Dabei kann sich beispielsweise ein gemeinsamer Drehpunkt der Verriegelungshebelelemente und/oder Hebelelemente außerhalb der eigentlichen Strecklagenlinie befinden. Die Bewegung des Umfeldsensors ist jedoch dabei vernachlässigbar klein, so dass der erfindungsgemäße Effekt erreicht werden kann, der Umfeldsensor also zumindest in der ausgefahrenen Stellung gegenüber einer äußeren Krafteinwirkung unbeweglich ist. Die Verriegelung erfolgt also erfindungsgemäß vorzugsweise mittels einer Übertotpunktlage. Ein trägerstrukturseitiger Hebel des Hauptlenkers ist vorzugsweise von einem Linearantrieb mit Spindelmutter angetrieben und über einen Koppellenker mit der Spindelmutter drehbar verbunden. Die Spindelmutter ist vorzugsweise in beide Richtungen entlang einer Spindelachse jeweils bis zu einem Endanschlag verfahrbar. Durch den jeweiligen Endanschlag ist vorzugsweise eine jeweilige Endlage (die eingefahrene Stellung und die ausgefahrene Stellung) definiert. Der Linearantrieb ist vorzugsweise selbsthemmend ausgebildet und blockiert dadurch die Verstellkinematik und mithin den Umfeldsensor zusätzlich in der jeweiligen Endstellung. Erfindungsgemäß wurde die Verstellkinematik hinsichtlich einer Unempfindlichkeit gegenüber Toleranzen optimiert. Hierdurch ist erreicht, dass der Umfeldsensor besonders in einer Betriebsposition, d. h. der ausgefahrenen Stellung, eine wiederholbar exakte bzw. akkurate Position einnimmt. Besonders bevorzugt ist das Hauptlenkerpaar mittels einer Torsionsstange verbunden, ganz bevorzug sogar zumindest teilweise als einstückiges Bauteil ausgeführt. Hierdurch läuft eine Bewegung zwischen dem rechten und dem linken Hauptlenker und somit eine Bewegung der Verstellkinematik synchronisiert ab.

In einer bevorzugten Ausführungsform umfasst der Umfeldsensor ein Gehäuse, mit dem er ein- und ausfahrbar in einer Öffnung der Dachhaut bzw. des Flächenbauteils angeordnet ist. Ferner ist eine die Öffnung umlaufende Dichtungsanordnung vorgesehen, die dazu ausgebildet ist, ein Eindringen von Feuchtigkeit in die Öffnung zu verhindern und eine Vorspannkraft gegenüber der Verstellkinematik zu erzeugen, durch die der Umfeldsensor zumindest in der ausgefahrenen Stellung fixiert ist. Erfindungsgemäß umfasst der Umfeldsensors bzw. ein Gehäuse des Umfeldsensors eine umlaufende Dichtung, beispielsweise eine Ringbunddichtung, durch die möglichst gleichmäßig eine Vorspannkraft in die Verstellkinematik eingebracht werden kann. Hierdurch wird ein Herausfallen des Umfeldsensors aus der Übertotpunktlage weiterhin verhindert.

Alternativ oder ergänzend zu der Dichtung kann an dem Gehäuse mindestens ein Anschlag vorgesehen sein, durch den der Umfeldsensor in einer jeweiligen Endlage gehalten ist. Ein derartiger Anschlag kann beispielsweise als Profil an dem Gehäuse ausgebildet sein. Ein Anschlag in der eingefahrenen Stellung kann beispielsweise durch einen Gehäusedeckel bereitgestellt sein. Der Gehäusedeckel schließt vorzugsweise flächenbündig mit dem umliegenden Flächenbauteil ab, wenn sich der Umfeldsensor in der eingefahrenen Stellung befindet. Ein derartiger Anschlag schlägt vorzugsweise an dem Flächenbauteil selbst oder an einer Trägerstruktur, die an dem Flächenbauteil angeordnet ist, oder an einem Dachmodulrahmen an.

Welche Art von Umfeldsensor in das Dachmodul eingebaut ist, ist grundsätzlich beliebig. Besonders vorteilhaft ist die Verwendung von Lidar-Sensoren und/oder Radar-Sensoren und/oder Kamera-Sensoren und/oder Multikamera-Sensoren.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Zudem beziehen sich sämtliche Ausführungsformen und Ausführungsbeispiele des Dachmoduls vollumfänglich auf ein Kraftfahrzeug, das ein solches Dachmodul aufweist.

Eine Ausführungsform der Erfindung ist in der Zeichnung schematisiert dargestellt und wird nachfolgend beispielhaft erläutert. Es zeigt:
- Figur 1: eine perspektivische Ansicht eines Fahrzeugdachs mit einem erfindungsgemäßen Dachmodul;
- Figur 2: ein erstes Ausführungsbeispiel einer erfindungsgemäßen Verstellkinematik in einer eingefahrenen Stellung des Umfeldsensors (a), einer Zwischenstellung des Umfeldsensors (b) und einer ausgefahrenen Stellung des Umfeldsensors (c);
- Figur 3: ein zweites Ausführungsbeispiel einer erfindungsgemäßen Verstellkinematik in einer ausgefahrenen Stellung des Umfeldsensors;
- Figur 4: ein drittes Ausführungsbeispiel einer erfindungsgemäßen Verstellkinematik in einer eingefahrenen Stellung des Umfeldsensors (a), einer Zwischenstellung des Umfeldsensors (b) und einer ausgefahrenen Stellung des Umfeldsensors (c); eine schematisch-perspektivische Ansicht der Verstellkinematik (d);
- Figur 5: ein viertes Ausführungsbeispiel einer erfindungsgemäßen Verstellkinematik in einer eingefahrenen Stellung des Umfeldsensors (a) und einer ausgefahrenen Stellung des Umfeldsensors (b);
- Figur 6: ein fünftes Ausführungsbeispiel einer erfindungsgemäßen Verstellkinematik in einer eingefahrenen Stellung des Umfeldsensors (a), einer ausgefahrenen Stellung des Umfeldsensors (b), einer freigestellten Ansicht einer Hebelanordnung in der eingefahrenen Stellung (c), einer freigestellten Ansicht der Hebelanordnung in der ausgefahrenen Stellung (d), einer freigestellten Ansicht einer Verriegelungshebelanordnung in der eingefahrenen Stellung (e) und einer freigestellten Ansicht der Verriegelungshebelanordnung in der ausgefahrenen Stellung (f);
- Figur 7: ein sechstes Ausführungsbeispiel einer erfindungsgemäßen Verstellkinematik in einer ausgefahrenen Stellung des Umfeldsensors (a), einer Zwischenstellung des Umfeldsensors (b) und einer eingefahrenen Stellung des Umfeldsensors (c);
- Figur 8: ein siebtes Ausführungsbeispiel einer erfindungsgemäßen Verstellkinematik in einer ausgefahrenen Stellung des Umfeldsensors (a), einer Zwischenstellung des Umfeldsensors (b) und einer eingefahrenen Stellung des Umfeldsensors (c);
- Figur 9: ein achtes Ausführungsbeispiel einer erfindungsgemäßen Verstellkinematik in einer schematischen Ansicht mit einer ausgefahrenen Stellung des Umfeldsensors (a) und einer eingefahrenen Stellung des Umfeldsensors (b); und
- Figur 10: ein neuntes Ausführungsbeispiel einer erfindungsgemäßen Verstellkinematik in schematischer Ansicht mit Sensorgehäuse (a) und mit ausgeblendetem Sensorgehäuse (b).

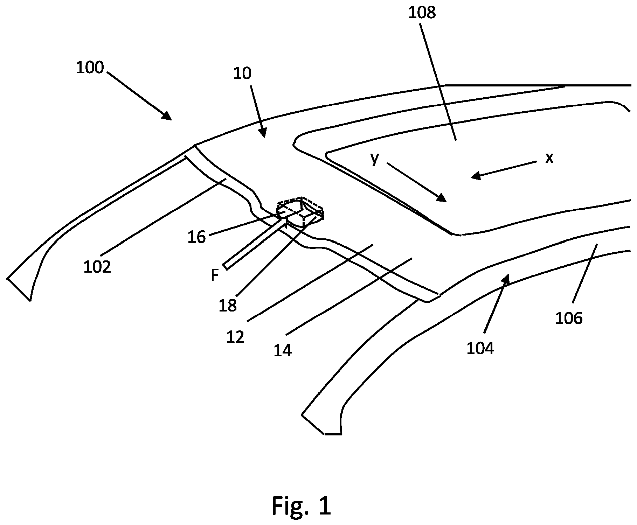

In Figur 1 ist ein Fahrzeugdach 100 eines Fahrzeuges dargestellt, das ein Dachmodul 10 umfasst. Das Dachmodul 10 umfasst ein Flächenbauteil 12 zur Bildung der Dachhaut 14 des Fahrzeugdachs 100 des Fahrzeuges (nicht komplett gezeigt). In einem in einer Fahrzeuglängsrichtung x betrachtet frontseitigen, mittleren Dachbereich des Fahrzeugdachs 100 bzw. des Dachmoduls 10 ist ein Umfeldsensor 16 (vorliegend ein Lidar-Sensor) angeordnet. Es können auch andere Sensortypen, z. B. (Multidirektional- )Kameras zum Einsatz kommen.

Der Umfeldsensor 16 ist unmittelbar hinter einem vorderen Querholm 102, der einen dachseitigen Windlauf des Fahrzeuges definiert, angeordnet. Das Dachmodul 10 umfasst ferner eine Verstellkinematik 18. Durch die Verstellkinematik 18 ist es möglich, den Umfeldsensor 16 von einer eingefahrenen Position in eine ausgefahrene Position, in der der Umfeldsensor 16 zumindest teilweise über die Dachhaut 14 hervorsteht, zu verstellen und ferner den Umfeldsensor 16 zumindest in der ausgefahrenen Stellung derart zu fixieren, dass der Umfeldsensor 16 gegenüber einer äußeren Kraft F unbeweglich ist. Bei der Kraft F kann es sich bspw. um eine Luftwiderstandskraft handeln, die auf den Umfeldsensor 16 in der ausgefahrenen Stellung wirkt. Alternativ oder ergänzend kann es sich auch bspw. um eine Windkraft oder um eine sonstige äußere Kraft handeln.

Das Dachmodul 10 ist vorzugsweise als Baueinheit in einen Dachrahmen 104 des Fahrzeuges eingesetzt bzw. auf die mindestens zwei Querholme 102 sowie mindestens zwei Längsholme 106, durch die der Dachrahmen 104 gebildet wird, aufgesetzt. Das Dachmodul 10 in dem gezeigten Ausführungsbeispiel weist ein Panoramadach 108 auf.

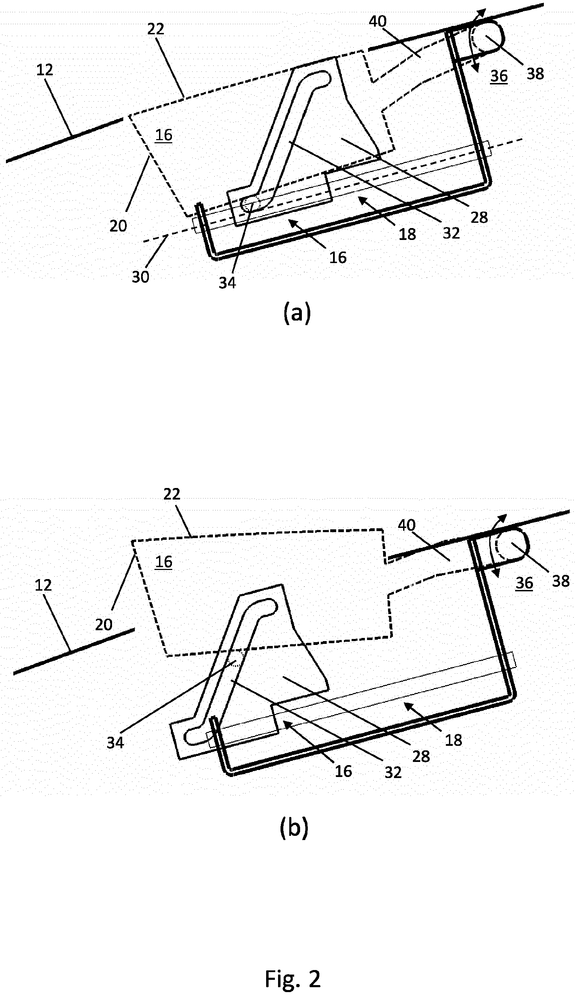

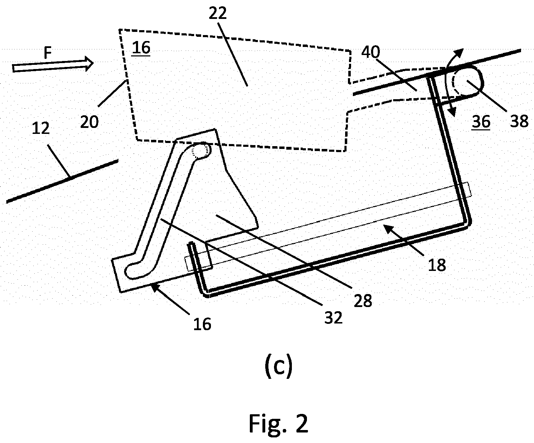

Figur 2 zeigt ein Ausführungsbeispiel der erfindungsgemäßen Verstellkinematik 18 mitsamt Umfeldsensor 16 in der eingefahrenen Stellung des Umfeldsensors 16 (siehe Figur 2(a)), in einer Zwischenstellung (d. h., zwischen der eingefahrenen Stellung und der ausgefahrenen Stellung) des Umfeldsensors 16 (siehe Figur 2(b)) und in der ausgefahrenen Stellung des Umfeldsensors 16 (siehe Figur 2(c)). Der Umfeldsensor 16 umfasst einen Durchsichtsbereich 20, der beispielsweise aus einem vorzugsweise bruchsicheren Kunststoff oder einem sonstigen (teil-)transparenten Material hergestellt sein kann. Ferner umfasst der Umfeldsensor 16 ein Gehäuse 22.

Die Verstellkinematik 18 umfasst einen Antrieb 24, der in den vorliegenden Figuren jeweils schematisch dargestellt ist. Bei dem Antrieb 24 kann es sich beispielsweise um einen Elektromotor oder um einen sonstigen Aktuator handeln. Der Antrieb 24 kann zur Verstellung des Umfeldsensors 16 mit einem Aktor 26 zusammenwirken, der in der Verstellkinematik 18 umfasst ist.

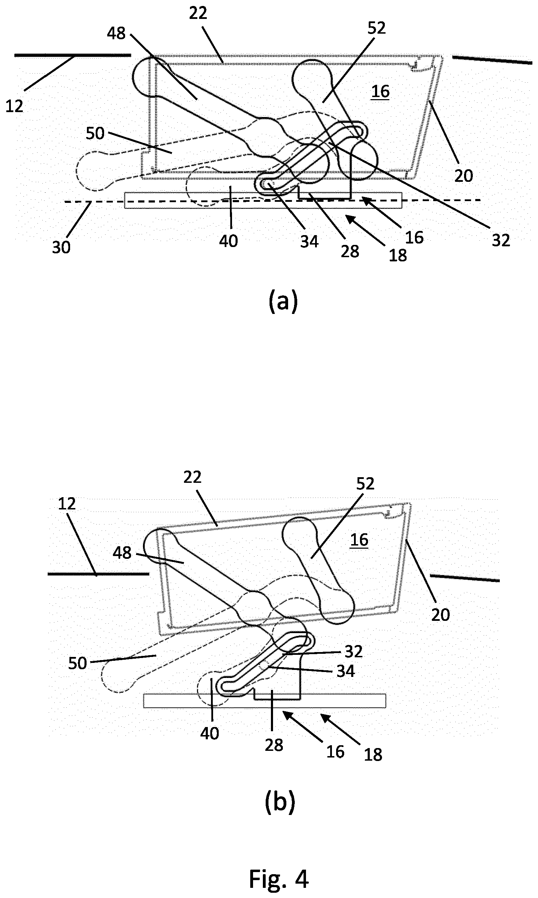

Bei dem Aktor 26 kann es sich bspw. um einen Schlitten 28 handeln, der entlang einer Antriebsachse 30 mittels des Antriebes 24 beweglich ist (siehe Figuren 2 bis 4). Der Antrieb 24 kann bspw. über ein Steigungskabel (nicht gezeigt) mit dem Schlitten 28 verbunden sein, um diesen entlang der Antriebsachse 30 (siehe Figuren 2(a), 3 und 4(a)) linear hin und her zu bewegen. Der Schlitten 28 umfasst eine Kulissenbahn 32, in der ein Führungsstift 34 beweglich angeordnet ist. Der Führungsstift 34 ist gegenüber der Antriebsachse 30 lediglich in einer Vertikalrichtung beweglich und vorzugsweise hinsichtlich der anderen beiden Linearbewegungsfreiheitsgrade eingeschränkt. Die Bewegung des Führungsstiftes 34 entlang der Kulissenbahn 32 wird durch eine Relativbewegung des Schlittens 28 entlang der Antriebsachse 30 eingeleitet. Durch eine Bewegung des Führungsstiftes 34 entlang der Kulissenbahn 32 wird der Umfeldsensor 16 von der eingefahrenen Stellung in die ausgefahrene Stellung verstellt (und umgekehrt). Der Führungsstift 34 bewegt sich entlang der Kulissenbahn 32 zwischen einem ersten, unteren Anschlag der Kulissenbahn 32 und einem zweiten, oberen Anschlag der Kulissenbahn 32. Zwischen dem ersten und dem zweiten Anschlag verläuft die Kulissenbahn 32 rampenförmig, weist also einen Steigungswinkel gegenüber der Antriebsachse 30 auf. Durch den ersten, unteren Anschlag ist der Umfeldsensor 16 in der eingefahrenen Stellung fixiert, so dass der Umfeldsensor 16 gegenüber einer äußeren Kraft F unbeweglich ist (siehe Figuren 2(a) und 4(a)). Durch den zweiten, oberen Anschlag ist der Umfeldsensor 16 in der ausgefahrenen Stellung fixiert, so dass der Umfeldsensor 16 gegenüber einer äußeren Kraft F unbeweglich ist (siehe Figuren 2(c), 3 und 4(c)). In den Figuren 2(b) und 4(b) befindet sich der Führungsstift 34 in einem etwa mittigen Bahnabschnitt entlang des rampenförmigen Verlaufs der Kulissenbahn 32, wobei sich der Umfeldsensor 16 in dieser Stellung des Führungsstiftes 34 auf der Kulissenbahn 32 in der Zwischenstellung befindet.

Wie aus den Figuren 2(a) bis 2(c) hervorgeht, kann der Führungsstift 34 vorzugsweise unmittelbar an dem Umfeldsensor 16 bzw. an dem Gehäuse 22 befestigt (bzw. gehalten) sein. Der Führungsstift 34 ist in diesem Fall gegenüber dem Umfeldsensor 16 unbeweglich. Dadurch wird eine Bewegung des Führungsstiftes 34 entlang der Kulissenbahn 32 unmittelbar auf den Umfeldsensor 16 übertragen. Der Umfeldsensor 16 kann in diesem Ausführungsbeispiel bspw. mittels einer an dem Gehäuse 22 (in Form eines Führungshebels 40) ausgebildeten Auskragung an einer Rahmenstruktur 36 des Dachmoduls 10 um eine Drehachse 38 drehbar in Form eines Festlagers gelagert sein. Durch die Festlagerung des Umfeldsensors 16, durch die dessen Bewegungsfreiheit in zwei Linearbewegungsfreiheitsgraden eingeschränkt ist, wird die Bewegung des Führungsstiftes 34 entlang der Kulissenbahn 32 in eine Drehbewegung des Umfeldsensors 16 um die Drehachse 38 übersetzt, so dass der Umfeldsensor 16 von der eingefahrenen Stellung in die ausgefahrene Stellung verstellbar ist.

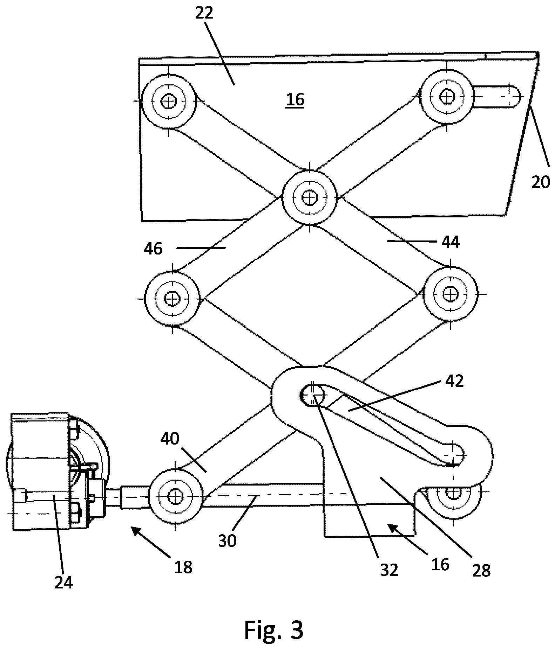

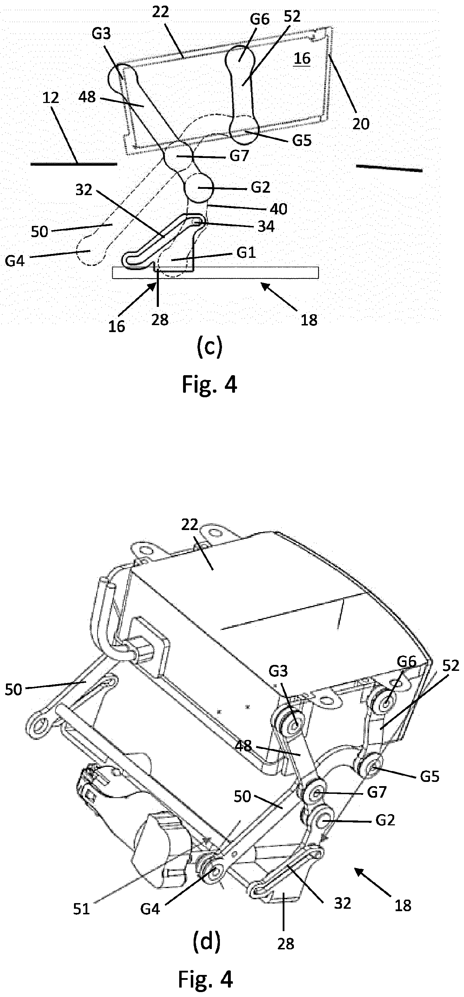

Alternativ zu einer fixen Anordnung des Führungsstiftes 34 unmittelbar an dem Umfeldsensor 16 bzw. an dessen Gehäuse 22 kann der Führungsstift 34 auch mit einem Führungshebel 40 fix verbunden sein (siehe Figuren 3 und 4(a) bis 4(c)). Der Führungshebel 40 ist vorzugsweise an seinem einen Ende (in Längsrichtung des Führungshebels 40 betrachtet) in einem Bereich, in dem die Antriebsachse 30 verläuft, mit dem Dachmodul 10 bzw. der Rahmenstruktur 36 in Form eines Festlagers drehbar verbunden. Durch die Festlagerung ist die Bewegungsfreiheit des Führungshebels 40 in zwei Linearbewegungsfreiheitsgraden eingeschränkt, so dass sich der Führungshebel 40 lediglich um eine Festlagerdrehachse (nicht eingezeichnet) drehen kann. Durch die fixe Anordnung des Führungsstiftes 34 an dem Führungshebel 40 wird eine Bewegung des Führungsstiftes 34 entlang (des rampenförmigen Bahnabschnittes) der Kulissenbahn 32 unmittelbar auf den Führungshebel 40 übertragen, der sich infolgedessen um seine Festlagerdrehachse dreht. Hinsichtlich der weiteren Verstellkinematik, die in Kombination mit dem Schlittenantrieb zur Verstellung des Umfeldsensors 16 Verwendung findet, gibt es grundsätzlich verschiedene Möglichkeiten, von denen nachstehend zwei bevorzugte Ausführungsbeispiele unter Bezugnahme auf die Figuren 3 und 4 näher erläutert werden.

In Figur 3 ist der Führungshebel 40 mit einem ersten Kreuzhebel 42 einer Kreuzhebelanordnung drehbar verbunden. Der erste Kreuzhebel 42 greift (entlang seiner Längserstreckung betrachtet) vorzugsweise mittig an einem Mittelpunkt des Führungshebels 40 (entlang dessen Längserstreckung betrachtet) an. An dem Mittelpunkt des Führungshebels 40 greift vorzugsweise auch der Führungsstift 34 an. Die beiden Hebel 40, 42 bilden somit in einer geöffneten Stellung ein Kreuz. Der Führungshebel 40 ist an seinem einen Ende in dem Bereich der Antriebsachse 30 des Schlittenantriebes in Form eines Festlagers drehbar an dem Dachmodul 10 fixiert. Das eine Ende des ersten Kreuzhebels 42 ist freistehend. Das andere Ende des Führungshebels 40 ist mit einem Ende eines zweiten Kreuzhebels 44 verbunden. Das andere Ende des ersten Kreuzhebels 42 ist mit einem Ende eines dritten Kreuzhebels 46 verbunden. Der zweite Kreuzhebel 44 ist mit dem dritten Kreuzhebel 46 jeweils in meinem entlang der Längserstreckung betrachtet mittigen Bereich (vorzugsweise im jeweiligen Mittelpunkt) drehbar verbunden. Das andere Ende des zweiten Kreuzhebels 44 ist mit dem Gehäuse 22 des Umfeldsensors 16 verbunden. Das andere Ende des dritten Kreuzhebels 46 ist mit dem Gehäuse 22 des Umfeldsensors 16 verbunden. Die beiden Verbindungspunkte an dem Gehäuse 22 sind voneinander, entlang einer Horizontalen betrachtet, beabstandet. Bewegt sich nun der Führungsstift 34 entlang der Kulissenbahn 32, wird diese Bewegung aufgrund der einseitigen Festlagerung des Führungshebels 40 in eine Drehung des Führungshebels 40 um eine Festgelenkdrehachse übersetzt. Durch die Verbindung mit dem ersten Kreuzhebel 42 sowie mit dem zweiten und dem dritten Kreuzhebel 44, 46 scheren die Hebel gegeneinander auf, wobei sich die jeweiligen Endbereiche der Hebel 40, 42, 44, 46 voneinander in einer Vertikalrichtung entfernen. Durch die endseitige Lagerung der Kreuzhebel 44, 46 an dem Umfeldsensor 16 wird dieser ebenfalls entlang der Vertikalen bewegt, kann also von der eingefahrenen Stellung in die ausgefahrene Stellung verstellt werden. Es versteht sich, dass ein Einfahren des Umfeldsensors 16 äquivalent hierzu, jedoch mit veränderter Bewegungsrichtung funktioniert.

In den Figuren 4(a) bis 4(d) ist der Führungshebel 40 an seinem einen Ende (d. h. einseitig endseitig) im Bereich der Antriebsachse 30 drehbar (in Form eines Festlagers) mit dem Dachmodul 10 bzw. einem Teil der Rahmenstruktur 36 verbunden. Die Figuren zeigen eine Kulissensteuerung mit einer Fixierung in der offenen und der geschlossenen Lage. Diese Verbindung bildet einen ersten Gelenkdrehpunkt G1 der Verstellkinematik 18 (siehe Figur 4(c)). Hierdurch kann sich der Führungshebel 40 um eine Festlagerdrehachse drehen. An seinem anderen Ende ist der Führungshebel 40 mit einem Ende eines ersten Stabilisierungshebels 48 der gezeigten Verstellkinematik 18 drehbar verbunden. Diese Verbindung bildet einen zweiten Gelenkdrehpunkt G2 der Verstellkinematik 18 aus (siehe Figur 4 (c)). An dem Führungshebel 40 ist der Führungsstift 34 in einem mittigen Bereich des Führungshebels 40 fixiert, der ansonsten beweglich in der Kulissenbahn 32 des Schlittens 28 gehalten ist. Der Führungshebel 40 weist einen abgewinkelten Verlauf mit zwei geraden Teilabschnitten entlang einer Längserstreckung auf. Der erste Stabilisierungshebel 48 ist an seinem anderen Ende mit dem Gehäuse 22 des Umfeldsensors 16 drehbar verbunden. Diese Verbindung bildet einen dritten Gelenkdrehpunkt G3 der Verstellkinematik 18 (siehe Figur 4(c)). Ferner umfasst die Verstellkinematik 18 einen Leithebel 50, der einseitig endseitig drehbar (in Form eines Festlagers) mit dem Dachmodul 10 bzw. einem Teil der Rahmenstruktur 36 verbunden ist. Wie aus Fig. (d) hervorgeht, sind die beiden Leitheben 50, rechts- und linksseitig, über eine Torsionsstange 51 verbunden. Durch die Torsionsstange 51 ist eine Bewegungssynchronisierung zwischen der rechten und der linken Seite (betrachtet in der Blickrichtung des Umfeldsensors 16) der Mehrgelenk-Kinematik bzw. der Verstellkinematik 18 möglich. Diese Verbindung bildet einen vierten Gelenkdrehpunkt G4 der Verstellkinematik 18 (siehe Figur 4(c)). Der Leithebel 50 ist an seinem anderen Ende mit einem Ende eines zweiten Stabilisierungshebels 52 drehbar verbunden. Diese Verbindung bildet einen fünften Gelenkdrehpunkt G5 der Verstellkinematik 18 (siehe Figur 4(c)). Der zweite Stabilisierungshebel 52 ist an seinem anderen Ende drehbar mit dem Gehäuse 22 des Umfeldsensors 16 verbunden. Diese Verbindung bildet einen sechsten Gelenkdrehpunkt G6 der Verstellkinematik 18 (siehe Figur 4(c)). Die beiden Gelenkdrehpunkte G3 und G6 sind voneinander an dem Gehäuse 22 des Umfeldsensors 16 beabstandet, um derart eine (schwerkraftbedingte) Verkippung des Gehäuses 22 zu hemmen. Der Leithebel 50 ist ferner, entlang einer Längserstreckung betrachtet, mit dem ersten Stabilisierungshebel 48 drehbar verbunden. Dieser Verbindungspunkt befindet sich vorliegend, ausgehend von dem Gelenkdrehpunkt G4, in einem Abstand von ca. 2/3 einer Länge des Leithebels 50 zu dem Gelenkdrehpunkt G4; und ausgehend von dem Gelenkdrehpunkt G3, in einem Abstand von ca. 2/3 einer Länge des ersten Stabilisierungshebels 48 zu dem Gelenkdrehpunkt G3 bzw. von dem Gelenkpunkt G3. Diese Verbindung bildet einen siebten Gelenkdrehpunkt G7 der Verstellkinematik 18 (siehe Figur 4(c)). Hierdurch bildet die Verstellkinematik 18 also eine 7-Gelenkpunkt-Kinematik aus.

Ausgehend von der eingefahrenen Stellung (siehe Figur 4(a) betrachtet, verursacht eine Bewegung des Führungsstiftes 34 entlang der Kulissenbahn 32 (von dem unteren Anschlag hin zu dem oberen Anschlag der Kulissenbahn) eine Drehung des Führungs- bzw. Leithebels 50 um den Gelenkdrehpunkt bzw. Drehpunkt G4. Durch die Verbindung mit dem ersten Stabilisierungshebel 48 wird diese Drehung in eine Drehung um den Gelenkdrehpunkt G2 übersetzt. Durch die Lagerung des Leithebels 50 um den Gelenkdrehpunkt G4 und dessen Verbindung mit dem ersten Stabilisierungshebel 48 an dem Gelenkdrehpunkt G7 wird die Drehung um Gelenkdrehpunkt G2 in eine Vertikalbewegung des Gelenkdrehpunktes G3 weg von der Antriebsachse 30 übersetzt, so dass der Umfeldsensor 16 mitsamt Gehäuse 22 angehoben wird. Aufgrund des zweiten Stabilisierungshebels 52 und dessen Verbindung mit den Gelenkdrehpunkten G5 und G6 wird auch ein vorderer Teil des Gehäuses 22 des Umfeldsensors 16 (in Richtung des Durchsichtsbereichs 20) angehoben. Hierdurch wird der gesamte Umfeldsensor 16 von der eingefahrenen Stellung in die ausgefahrene Stellung verstellt.

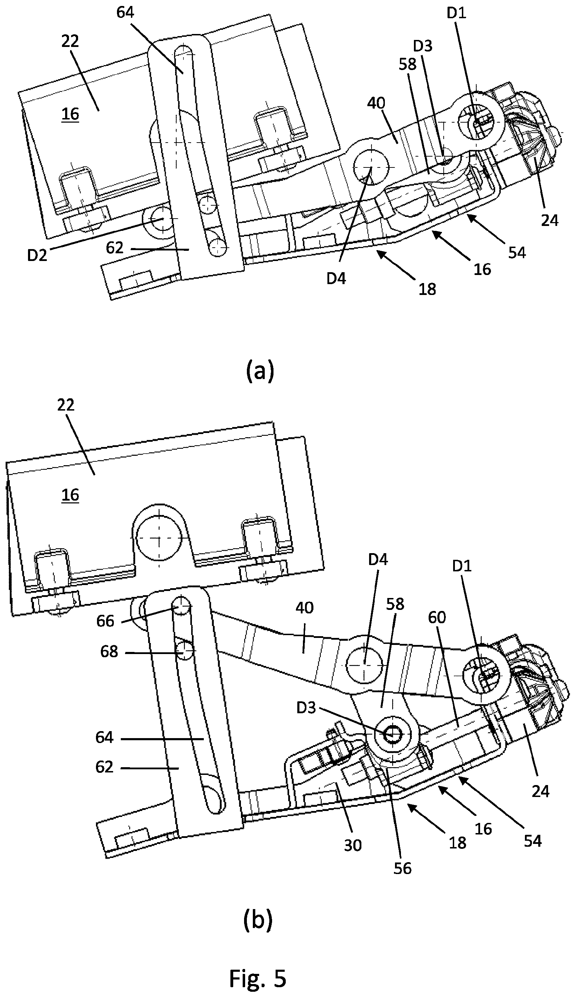

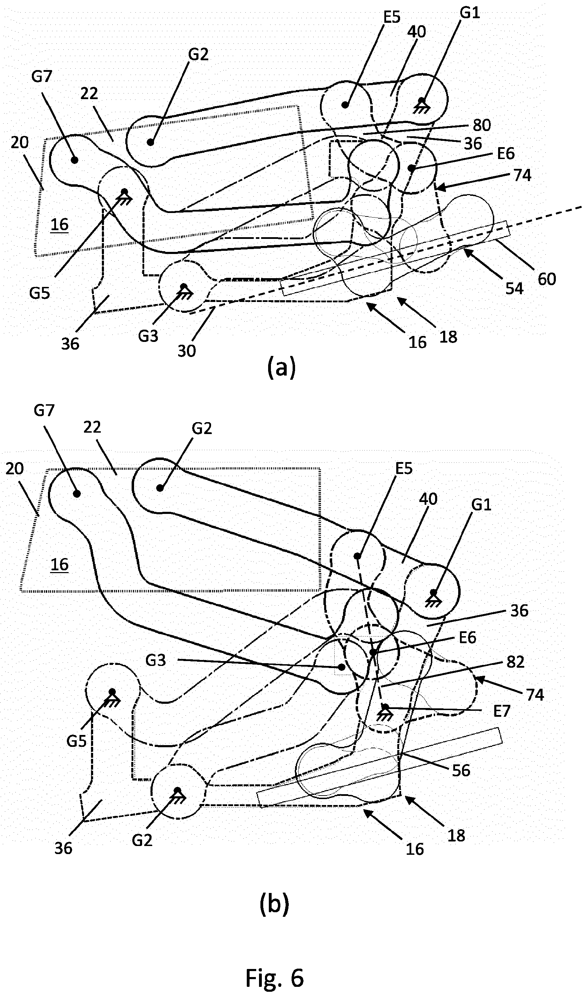

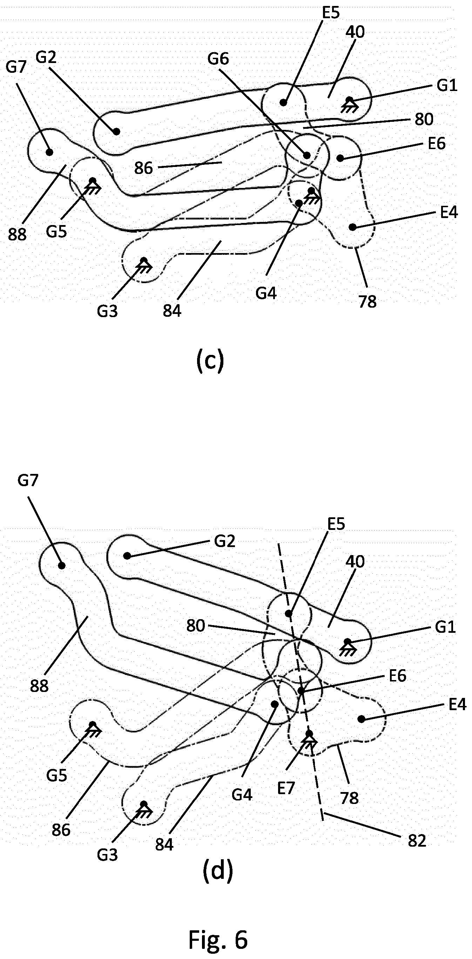

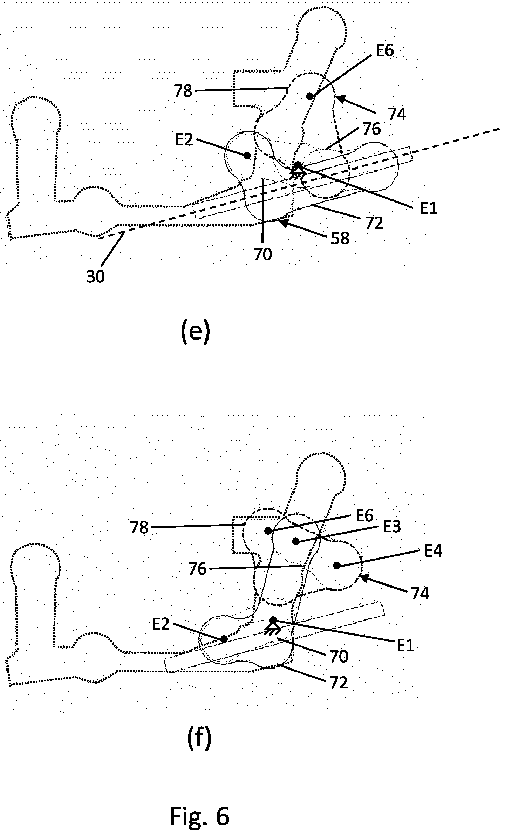

Eine Alternative zu einem schlittenbasierten Antrieb der Verstellkinematik (wie er in den Figuren 2 bis 4 dargestellt ist) bildet bspw. ein Spindelmutterantrieb 54, wie er in den Figuren 5 und 6 dargestellt ist. Auch andere, hier nicht dargestellte Antriebssysteme sind vorstellbar. Der Spindelmutterantrieb 54 umfasst eine entlang der Antriebsachse 30 des Spindelmutterantriebes 54 bewegliche Spindelmutter 56. An der Spindelmutter 56 ist mindestens ein Verkipphebel 58 beweglich (d. h. um eine Drehachse drehbar) angeordnet, mittels dessen der Umfeldsensor 16 von der eingefahrenen in die ausgefahrene Stellung verstellbar ist (siehe Figur 5). Die Spindelmutter 56 ist vorzugsweise relativ zu der Antriebsachse 30 lediglich linear beweglich und kann sich nicht um die Antriebsachse 30 drehen. Die Spindelmutter 56 ist auf einer Spindel 60 geführt, die um die Antriebsachse 30, z. B. mittels des Antriebes 24, gedreht wird. Hinsichtlich der weiteren Verstellkinematik, die in Kombination mit dem Spindelantrieb zur Verstellung des Umfeldsensors 16 Verwendung findet, gibt es grundsätzlich verschiedene Möglichkeiten, von denen nachstehend zwei bevorzugte Ausführungsbeispiele unter Bezugnahme auf die Figuren 5 und 6 näher erläutert werden.

Figur 5 zeigt den Umfeldsensor 16 in einer Ansicht in der Fahrzeuglängsrichtung x von hinten. Der Antrieb 24 ist rechtsseitig, seitlich neben dem Umfeldsensor 16, in der Fahrzeugbreitenrichtung y angeordnet. In den Figuren 5(a) und 5(b) ist der Führungshebel 40 an seinem einen Ende (d. h. einseitig endseitig) im Bereich der Antriebsachse 30 drehbar (in Form eines Festlagers) mit dem Dachmodul 10 bzw. einem Teil der Rahmenstruktur 36 verbunden. Der Führungshebel 40 ist dadurch um einen ersten Drehpunkt D1 relativ zu der Rahmenstruktur 36 drehbar. Die Beweglichkeit des Führungshebels 40 ist auf eine Drehbarkeit um die Festlagerdrehachse beschränkt. An seinem anderen Ende ist der Führungshebel 40 drehbar mit dem Gehäuse 22 des Umfeldsensors 16, vorliegend an einer Gehäuseunterseite des Gehäuses 22, verbunden. Der Führungshebel 40 ist dadurch relativ zu dem Gehäuse 22 um einen zweiten Drehpunkt D2 drehbar. Der mindestens eine Verkipphebel 58 ist, wie vorstehend bereits beschrieben, an einem Ende drehbar an der Spindelmutter 56 gelagert. Der Verkipphebel 58 ist dadurch relativ zu der Spindelmutter 56 um einen dritten Drehpunkt D3 drehbar. An seinem anderen Ende ist der Verkipphebel 58 mit dem Führungshebel 40 drehbar verbunden. Der Verkipphebel 58 ist dadurch relativ zu dem Führungshebel 40 um einen vierten Drehpunkt D4 drehbar. Wird die Spindelmutter 56 entlang der Spindel 60 (ausgehend von der eingefahrenen Stellung) von einer Anschlagstellung (siehe Figur 5(a)) wegbewegt, führt dies dazu, dass der mindestens eine Verkipphebel 58 eine Drehung (im Uhrzeigersinn) um den Drehpunkt D3 ausführt. Diese Drehung wird über den Drehpunkt D4 (d. h. die Drehpunktlagerung) auf den Führungshebel 40 übertragen. Dieser dreht sich infolgedessen um den Drehpunkt D1 und ist ansonsten relativ zu dem Dachmodul 10 fixiert. Hierdurch wird der Führungshebel 40 (im Uhrzeigersinn) um den Drehpunkt D1 gedreht. Diese Bewegung führt dazu, dass der Umfeldsensor 16 von der eingefahrenen Stellung in die ausgefahrene Stellung (siehe Figur 5(b)) verstellt wird und somit entlang der Vertikalen angehoben wird. In der ausgefahrenen Stellung des Umfeldsensors 16 ist der mindestens eine Verkipphebel 58 im Wesentlichen orthogonal zu der Antriebsachse 30 ausgerichtet. Durch diese Ausrichtung ist der Umfeldsensor 16 in der ausgefahrenen Stellung fixiert, da eine äußere Kraft F, die auf den Umfeldsensor 16 ausgeübt wird, rechtwinklig zu der Antriebsachse 30 in das Dachmodul 10 abgeleitet wird. Es entsteht also kein Drehmoment in einem der Hebel der Verstellkinematik 18, durch das versucht wird, den Umfeldsensor 16 zurück in die eingefahrene Stellung zu bewegen. Dies kann nur mittels Betätigung des Antriebes 24 erfolgen. Die Verstellkinematik 18 gemäß dem Ausführungsbeispiel aus Figur 5 umfasst ferner eine Führungsschiene 62 mit einer Führungsnut 64. In der Führungsnut 64, die vorzugsweise einen im Wesentlichen geraden Verlauf aufweist, ist ein erster Gleitstift 66 beweglich angeordnet. Der erste Gleitstift 66 ist ferner an dem Gehäuse 22 des Umfeldsensors 16 fixiert. Um eine Verkippung des Umfeldsensors 16 um den Drehpunkt D2 zu verhindern, umfasst die Verstellkinematik 18 ferner einen zweiten Gleitstift 68, der ebenfalls an dem Gehäuse 22 des Umfeldsensors 16 fixiert ist. Der erste Gleitstift 66 ist von dem zweiten Gleitstift 68 beabstandet an dem Gehäuse 22 angeordnet. Durch die Beabstandung wird das Verkippen des Umfeldsensors 16 um den Drehpunkt D2 verhindert. Die Führungsschiene 62 dient insbesondere der Stabilisierung des Umfeldsensors 16 bei der Ein- bzw. Ausfahrbewegung entlang der Vertikalen.

In Figur 6(a) bis (f) wird eine komplexere Ausgestaltung der erfindungsgemäßen Verstellkinematik 18 beschrieben. In Figur 6(a) ist der Umfeldsensor 16 in der eingefahrenen Stellung gezeigt. In Figur 6(b) ist der Umfeldsensor 16 in der ausgefahrenen Stellung gezeigt. In den Figuren 6(c) bis (f) sind jeweils mehrere Hebel der Verstellkinematik 18 in isolierter Darstellung gezeigt, um deren Interaktion und jeweilige Verbindung anschaulicher erklären zu können. Der mindestens eine Verkipphebel 58 umfasst in dem sechsten Ausführungsbeispiel einen ersten Verkipphebelarm 70 und einen zweiten Verkipphebelarm 72. Der erste Verkipphebelarm 70 ist endseitig, um einen ersten Drehpunkt E1 drehbar, mit der Spindelmutter 56 verbunden. Der erste Verkipphebelarm 70 ist ferner relativ zu dem zweiten Verkipphebelarm 72 um einen zweiten Drehpunkt E2 drehbar mit diesem endseitig verbunden (siehe Figuren 6(e) und (f)). Ferner ist der zweite Verkipphebelarm 72 drehbar mit einer Verriegelungshebelanordnung 74 verbunden. Die Verriegelungshebelanordnung 74 umfasst mindestens ein erstes und ein zweites Verriegelungshebelelement 76, 78, mittels derer der Umfeldsensor 16 in der eingefahrenen Stellung und in der ausgefahrenen Stellung fixierbar ist, so dass der Umfeldsensor 16 jeweils gegenüber einer äußeren Kraft unbeweglich ist. Hierzu ist der zweite Verkipphebelarm 72 um einen dritten Drehpunkt E3 drehbar mit dem ersten Verriegelungshebelelement 76 verbunden (siehe Figur 6 (b)). Das erste Verriegelungshebelelement 76 ist ferner um einen vierten Drehpunkt E4 drehbar mit dem zweiten Verriegelungshebelelement 78 verbunden.

In dem sechsten Ausführungsbeispiel ist der Führungshebel 40 an seinem einen Ende drehbar mit dem Dachmodul 10 bzw. der Rahmenstruktur 36 verbunden. Diese Verbindung bildet den ersten Gelenkdrehpunkt G1 dieser Verstellkinematik 18 (siehe Figuren 6(c) und 6(d)). An seinem anderen Ende ist der Führungshebel 40 drehbar mit dem Gehäuse 22 des Umfeldsensors 16 verbunden. Diese Verbindung bildet den zweiten Gelenkdrehpunkt G2 dieser Verstellkinematik 18 (siehe Figuren 6(c) und 6(d)). Ferner ist der Führungshebel 40, ausgehend von dem Gelenkdrehpunkt G1 entlang einer Längsachse betrachtet, im Abstand von ca. 1/4 seiner Länge mit einem Ende eines Verbindungshebels 80 um einen fünften Drehpunkt E5 drehbar verbunden (siehe Figuren 6(a) und 6(b)). Der Verbindungshebel 80 ist an einem anderen Ende um einen sechsen Drehpunkt E6 drehbar mit dem zweiten Verriegelungselement 78 der Verriegelungshebelanordnung 74 verbunden (siehe Figuren 6(a) und(b)). Das zweite Verriegelungselement 78 ist im Wesentlichen dreieckförmig ausgeführt und weist mindestens die zwei Verbindungspunkte E4 und E6 auf. Ferner ist das zweite Verriegelungselement 78 mittels eines dritten Verbindungspunktes um eine Drehachse E7 drehbar an dem Dachmodul 10 in Form eines Festlagers gelagert und somit gegenüber dem Dachmodul 10 auf eine Drehung um die Drehachse E7 beschränkt. Wird die Spindelmutter 56 ausgehend von der eingefahrenen Stellung des Umfeldsensors 16 (siehe Figur 6(a)) auf der Spindel 60 entlang der Antriebsachse 30 bewegt, führt dies zu einer Drehung des ersten Verkipphebelarms 70 um die Drehachse E1. Diese Drehung wird in eine Drehung des zweiten Verkipphebelarms 72 um die Drehachse E2 umgesetzt, die wiederum durch eine Drehung um die Drehachse E3 auf das erste Verriegelungshebelelement 76 umgesetzt wird. Dieses dreht wiederum das zweite Verriegelungshebelelement 78 um die Drehachse E4. Da das zweite Verriegelungshebelelement 78 mit dem Verbindungshebel 80 um die Drehachse E6 drehbar verbunden ist, wird die Drehung des zweiten Verriegelungshebelelements 78 um die Drehachse E4 auf den Verbindungshebel 80 übertragen. Das zweite Verriegelungshebelelement 78 kann sich selbst nur um die Drehachse E7 drehen, da es ansonsten gegenüber dem Dachmodul 10 mittels eines Festlagers fixiert ist. Durch dessen drehbare Verbindung mit dem Führungshebel 40 um die Drehachse E5 wird diese Drehung in eine Drehung des Führungshebels 40 um den Gelenkdrehpunkt G1 übersetzt, wodurch sich der Umfeldsensor 16 von der eingefahrenen Stellung in die ausgefahrene Stellung verstellt, d. h. mittels des Führungshebels 40 in einer Richtung weg von der Antriebsachse 30 vertikal angehoben wird. In der ausgefahrenen Stellung des Umfeldsensors 16 befinden sich der Verbindungshebel 80 und das zweite Verriegelungshebelelement 78 in einer derartigen Stellung, dass die Drehpunkte E5, E6 und E7 allesamt auf einer Überstreckgeraden 82 angeordnet sind, so dass sich die Verriegelungshebelanordnung 74 in einer Übertotpunktstellung befindet, in der der Umfeldsensor 16 nicht mehr durch eine äußere Kraft F aus der ausgefahren Stellung in die eingefahrene Stellung verstellt werden kann (siehe Figur 6(d)). Auch in der eingefahrenen Stellung des Umfeldsensors 16 wird dessen Beweglichkeit mittels einer äußeren Kraft F durch eine Sperrstellung des zweiten Verkipphebelarms 72 in Verbindung mit dem ersten Verriegelungshebelelement 76 und dem zweiten Verriegelungshebelelement 78 wirksam verhindert (siehe Figur 6(e)). Der im Wesentlichen L-förmige zweite Verkipphebelarm 72 ist dabei mit seinem langen Hebelabschnitt im Wesentlichen parallel zu der Antriebsachse 30 ausgerichtet.

Zur Führung bzw. Stabilisierung der Bewegung des Umfeldsensors 16 umfasst die Verstellkinematik 18 ferner einen ersten Stabilisierungshebel 84, einen zweiten Stabilisierungshebel 86 und einen dritten Stabilisierungshebel 88. Der erste Stabilisierungshebel 84 ist an seinem einen Ende drehbar mit dem Dachmodul 10 bzw. der Rahmenstruktur 36 in Form eines Festlagers verbunden. Diese Verbindung bildet den dritten Gelenkdrehpunkt G3 dieser Verstellkinematik 18 aus (siehe Figuren 6 (c) und 6 (d)). An seinem anderen Ende ist der erste Stabilisierungshebel 84 drehbar mit dem dritten Stabilisierungshebel 88 verbunden. Diese Verbindung bildet den vierten Gelenkdrehpunkt G4 dieser Verstellkinematik 18 (siehe Figuren 6(c) und 6(d)). Ferner ist der zweite Stabilisierungshebel 86 an seinem einen Ende drehbar mit dem Dachmodul 10 bzw. der Rahmenstruktur 36 in Form eines Festlagers verbunden. Diese Verbindung bildet den fünften Gelenkdrehpunkt G5 dieser Verstellkinematik 18 (siehe Figuren 6(c) und 6(d)). An seinem anderen Ende ist der zweite Stabilisierungshebel 86 drehbar mit dem dritten Stabilisierungshebel 88 verbunden. Diese Verbindung bildet den sechsten Gelenkdrehpunkt G6 dieser Verstellkinematik 18 (siehe Figur 6(c)). Der dritte Stabilisierungshebel 88 ist an seinem einen Ende um den Gelenkdrehpunkt G6 drehbar mit dem zweiten Stabilisierungshebel 86 verbunden. An seinem anderen Ende ist der dritte Stabilisierungshebel 88 drehbar mit dem Gehäuse 22 des Umfeldsensors 16 verbunden. Diese Verbindung bildet den siebten Gelenkdrehpunkt G7 dieser Verstellkinematik 18 (siehe Figuren 6(a) bis (d)). Diese Ausführungsform bildet somit vorzugsweise eine 7-Gelenkanordnung aus, mittels derer der Verstellmechanismus des Umfeldsensors 16 realisiert ist. Durch die fixe Anordnung des ersten Stabilisierungshebels 84 und des zweiten Stabilisierungshebels 86 an dem Dachmodul 10 sowie deren Verbindung untereinander und mittelbar mit dem Gehäuse 22 über den dritten Stabilisierungshebel 88 kann eine Bewegung des Umfeldsensors 16 kontrolliert geführt werden und ein Verkippen des Umfeldsensors 16, bspw. um einen der Gelenkdrehpunkte G2 oder G7, effektiv verhindert werden.

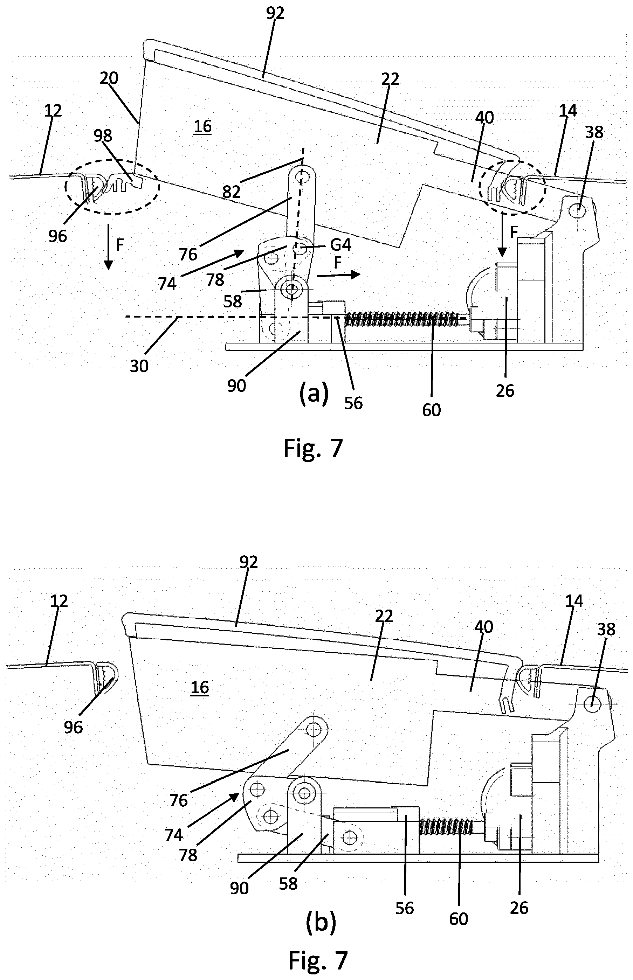

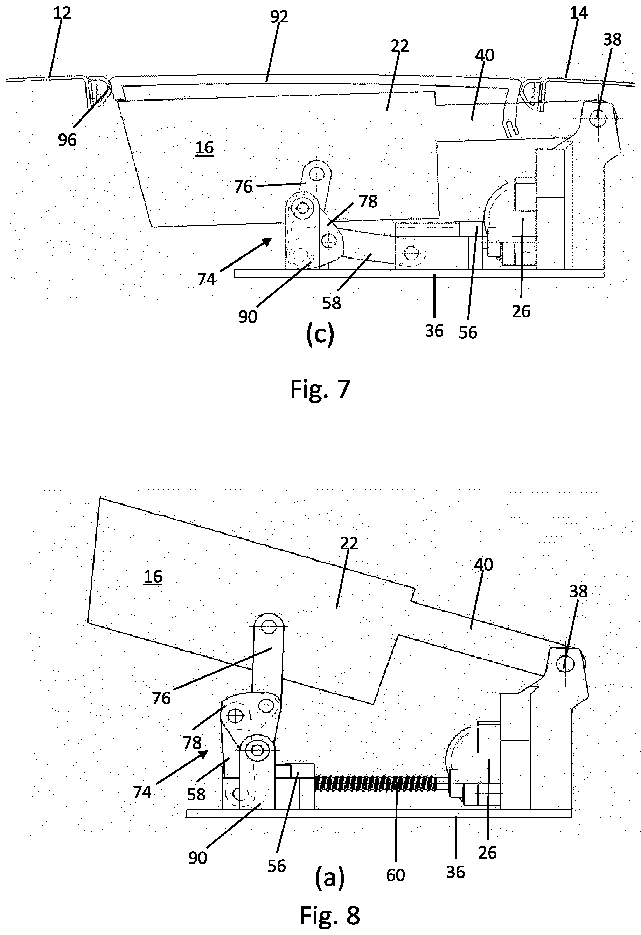

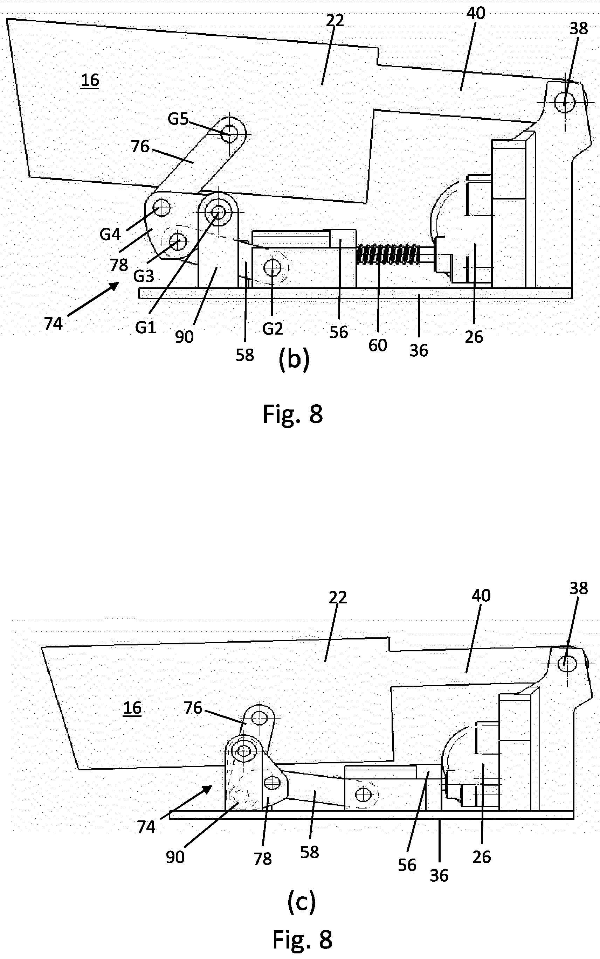

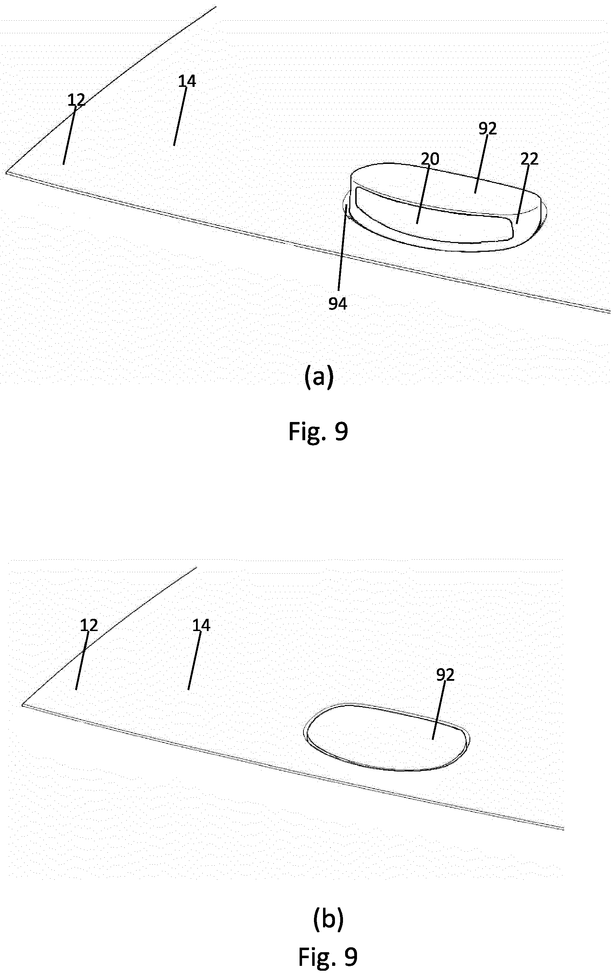

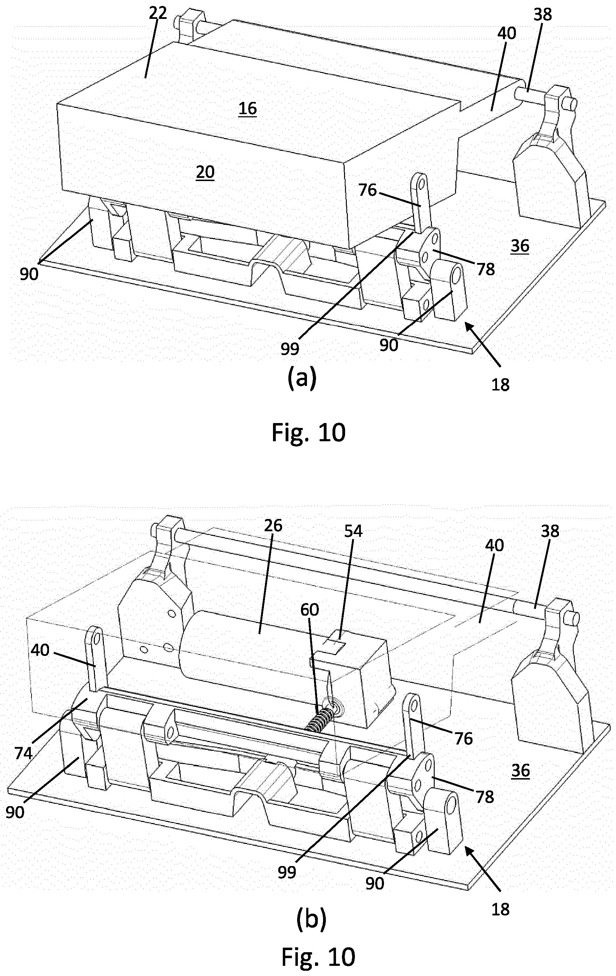

In den Figuren 7 bis 10 sind weitere Ausführungsbeispiele der erfindungsgemäßen Verstellkinematik 18 dargestellt. Dabei ist das zweite Verriegelungshebelelement 78 über eine Festlagerung 90 drehbar mit dem Dachmodul 10 verbunden. Die Festlagerung 90 ist vorzugsweise als Trägerbauteil an der Rahmenstruktur 36 des Dachmoduls 10 angeordnet. Die Festlagerung 90 dient als Hauptdrehpunkt, um den sich die Verstellkinematik 18 bzw. die Verriegelungshebelanordnung 74 bzw. das zweite Verriegelungshebelelement 78 mitsamt der daran drehbar befestigten Hebel 40, 58 dreht. Das zweite Verriegelungshebelelement 78 ist um einen Gelenkdrehpunkt G1 der Festlagerung 90 drehbar. Der Verkipphebel 58 ist an seinem einen Ende mit der Spindelmutter 56 des Spindelmutterantrieb 54 drehbar verbunden und ist dabei um einen Gelenkdrehpunkt G2 drehbar. An seinem gegenüberliegenden Ende ist der Verkipphebel 58 mit dem zweiten Verriegelungshebelelement 78 um einen Gelenkdrehpunkt G3 drehbar verbunden. Der zweite Verriegelungshebelelement 78 ist um einen Gelenkdrehpunkt G4 drehbar mit einem Ende des ersten Verriegelungshebelelements 76 verbunden. Der erste Verriegelungshebelelement 76 ist an seinem gegenüberliegenden Ende um einen Gelenkdrehpunkt G5 drehbar mit dem Umfeldsensor 16 bzw. dem Gehäuse 22 verbunden. Das Gehäuse 22 ist mittels des Führungshebels 40 um die Drehachse 38 drehbar mit einem Trägerbauteil des Dachmoduls 10 verbunden. Aus Fig. 7(a) geht hervor, dass sich der Drehpunkt G4 in der ausgefahrenen Stellung des Umfeldsensors 16 leicht außerhalb der Überstreckgeraden 82 befindet.

Das Gehäuse 22 umfasst einen Gehäusedeckel 92, der in der eingefahrenen Stellung des Umfeldsensors 16 flächenbündig mit dem umliegenden Flächenbauteil 12 abschließt. Der Umfeldsensor 16 ist mitsamt dem Gehäuse 22 ein- und ausfahrbar in einer Öffnung 94 der Dachhaut 14 bzw. des Flächenbauteils 12 angeordnet. Der Gehäusedeckel 92 ist an dem Gehäuse 22 dachseitig angeordnet. Ferner ist an der Öffnung 94 bzw. die Öffnung 94 umlaufend eine Dichtungsanordnung 96 vorgesehen, die dazu ausgebildet ist, ein Eindringen von Feuchtigkeit in die Öffnung 94 zu verhindern und eine Vorspannkraft gegenüber der Verstellkinematik 18 zu erzeugen, durch die der Umfeldsensor 16 zumindest in der ausgefahrenen Stellung fixiert ist. Die Dichtungsanordnung 96 ist beispielsweise eine Ringbunddichtung. Der Gehäusedeckel 92 schlägt in der eingefahrenen Stellung an der Dichtungsanordnung 96 an und dichtet damit die Öffnung 94 feuchtigkeitsdicht ab. Zur Abdichtung in der ausgefahrenen Stellung ist an dem Gehäuse 22 ein Anschlagprofil 98 angeordnet (siehe Fig. 7(a)). Mit dem Bezugszeichen 99 ist ein Endlageanschlag bezeichnet, an dem das erste Verriegelungshebelelement 76 an dem zweiten Verriegelungshebelelement 78 anschlägt.. In Fig. 7 (a) ist eine beispielhafte Krafteinwirkung mit der Kraft F auf den Umfeldsensor 16 bzw. auf verschiedene Bereiche der Verstellkinematik 18 angezeigt.

Die Verstellkinematik 18 gemäß der in den Figuren 7 bis 10 gezeigten Ausführungsform umfasst den Endlagenanschlag 99 zwischen ersten und zweiten Verriegelungshebelelement 76, 78 in der ausgefahrenen Stellung des Umfeldsensors 16. In der geschlossenen Stellung des Umfeldsensors 16 nimmt der Verkipphebel 58 einen günstigen Winkel zum Verriegelungshebelelement 78 ein und stellt zusammen mit eines Spindelführung des Spindelmutterantriebes 54, durch den die Spindel 60 geführt ist, eine stabile Endlagenanschlag bereit.

### Bezugszeichenliste

- 10: Dachmodul
- 12: Flächenbauteil
- 14: Dachhaut
- 16: Umfeldsensor
- 18: Verstellkinematik
- 20: Durchsichtsbereich
- 22: Gehäuse
- 24: Antrieb
- 26: Aktor
- 28: Schlitten
- 30: Antriebsachse
- 32: Kulissenbahn
- 34: Führungsstift
- 36: Rahmenstruktur des Dachmoduls
- 38: Drehachse
- 40: Führungshebel
- 42: erster Kreuzhebel
- 44: zweiter Kreuzhebel
- 46: dritter Kreuzhebel
- 48: erster Stabilisierungshebel
- 50: Leithebel
- 51: Torsionsstange
- 52: zweiter Stabilisierungshebel
- 54: Spindelmutterantrieb
- 56: Spindelmutter
- 58: Verkipphebel
- 60: Spindel
- 62: Führungsschiene
- 64: Führungsnut
- 66: erster Gleitstift
- 68: zweiter Gleitstift
- 70: erster Verkipphebelarm
- 72: zweiter Verkipphebelarm
- 74: Verriegelungshebelanordnung
- 76: erstes Verriegelungshebelelement
- 78: zweites Verriegelungshebelelement
- 80: Verbindungshebel
- 82: Überstreckgerade bzw. Übertotpunktgerade
- 84: erster Stabilisierungshebel
- 86: zweiter Stabilisierungshebel
- 88: dritter Stabilisierungshebel
- 90: Festlagerung
- 92: Gehäusedeckel
- 94: Öffnung
- 96: Dichtungsanordnung
- 98: Anschlagprofil
- 99: Endlageanschlag
- 100: Fahrzeugdach
- 102: Querholm
- 104: Dachrahmen
- 106: Längsholm
- 108: Panoramadach

- D1: Drehpunkt
- D2: Drehpunkt
- D3: Drehpunkt
- D4: Drehpunkt
- G1: Gelenkdrehpunkt
- G2: Gelenkdrehpunkt
- G3: Gelenkdrehpunkt
- G4: Gelenkdrehpunkt
- G5: Gelenkdrehpunkt
- G6: Gelenkdrehpunkt
- G7: Gelenkdrehpunkt
- E1: Drehpunkt, Drehachse
- E2: Drehpunkt, Drehachse
- E3: Drehpunkt, Drehachse
- E4: Drehpunkt, Drehachse
- E5: Drehpunkt, Drehachse
- E6: Drehpunkt, Drehachse
- E7: Drehpunkt, Drehachse
- x: Fahrzeuglängsrichtung
- y: Fahrzeugbreitenrichtung

## Patentansprüche

1. Dachmodul zur Bildung eines Fahrzeugdachs (100) an einem Kraftfahrzeug mit einem Flächenbauteil (12), dessen Außenoberfläche zumindest bereichsweise die Dachhaut (14) des Fahrzeugdachs (100) bildet und als eine äußere Dichtfläche des Dachmoduls (10) fungiert, mindestens einem Umfeldsensor (16), mittels dessen in einem autonomen oder teilautonomen Fahrbetrieb des Kraftfahrzeuges ein Fahrzeugumfeld erfassbar ist, und einer Verstellkinematik (18) mit einem Antrieb (24), die dazu ausgebildet ist, den mindestens einen Umfeldsensor (16) von einer eingefahrenen Stellung in eine ausgefahrene Stellung, in der der mindestens eine Umfeldsensor (16) über die Dachhaut (14) hervorsteht, um das Fahrzeugumfeld zu erfassen, zu verstellen und den mindestens einen Umfeldsensor (16) zumindest in der ausgefahrenen Stellung derart zu fixieren, dass der mindestens eine Umfeldsensor (16) gegenüber einer äußeren Kraft unbeweglich ist,
**dadurch gekennzeichnet, dass**
die Verstellkinematik (18) einen Führungshebel (40) und einen Schlitten (28) umfasst,
wobei der Schlitten (28) mittels des Antriebes (24) entlang einer Antriebsachse (30) beweglich ist und eine Kulissenbahn (32) umfasst, in der ein Führungsstift (34) beweglich ist, mittels dessen Bewegung entlang der Kulissenbahn (32) der mindestens eine Umfeldsensor (16) von der eingefahrenen Stellung in die ausgefahrene Stellung verstellbar ist,
wobei der Führungsstift (34) zwischen einem ersten Anschlag der Kulissenbahn (32), durch den der mindestens eine Umfeldsensor (16) in der eingefahrenen Stellung fixiert ist, und einem zweiten Anschlag der Kulissenbahn (32), durch den der mindestens eine Umfeldsensor (16) in der ausgefahrenen Stellung fixiert ist, beweglich ist.

2. Dachmodul nach Anspruch 1, **dadurch gekennzeichnet, dass** der Führungshebel (40) mit seinem einen Ende drehbar mit dem Dachmodul (10) verbunden ist.

3. Dachmodul nach Anspruch 1 oder 2, **dadurch gekennzeichnet, dass** der Führungsstift (34) fix an dem Führungshebel (40) angeordnet ist.

4. Dachmodul nach einem der Ansprüche 1 bis 3, **dadurch gekennzeichnet, dass** der Führungshebel (40) und mindestens ein Kreuzhebel (42) eine Kreuzhebelanordnung (40, 42, 44, 46) ausbilden, wobei zwei Hebelenden der Kreuzhebelanordnung (44, 46) mit dem mindestens einen Umfeldsensor (16) drehbar verbunden sind.

5. Dachmodul nach einem der Ansprüche 2 bis 4, **dadurch gekennzeichnet, dass** die Verstellkinematik (18) einen Leithebel (50), einen ersten Stabilisierungshebel (48) und einen zweiten Stabilisierungshebel (52) umfasst, der Leithebel (50) mit dem ersten und dem zweiten Stabilisierungshebel (52) drehbar verbunden ist, der Führungshebel (40) mit dem ersten Stabilisierungshebel (48) drehbar verbunden ist und der erste Stabilisierungshebel (48) und der zweite Stabilisierungshebel (52) mit dem mindestens einen Umfeldsensor (16) drehbar verbunden sind.

6. Dachmodul nach Anspruch 1, **dadurch gekennzeichnet, dass** der Führungsstift (34) fix an dem mindestens einen Umfeldsensor (16) angeordnet ist.

7. Dachmodul nach Anspruch 1 oder 2, **dadurch gekennzeichnet, dass** die Verstellkinematik (18) einen Spindelmutterantrieb (54) mit einer entlang einer Antriebsachse (30) beweglichen Spindelmutter (56) umfasst, an der mindestens ein Verkipphebel (58) beweglich angeordnet ist, mittels dessen der mindestens eine Umfeldsensor (16) von der eingefahrenen in die ausgefahrene Stellung verstellbar ist, wobei die Verstellkinematik (18) vorzugsweise eine Führungsschiene (62) mit einer Führungsnut (64) umfasst, in der ein an dem mindestens einen Umfeldsensor (16) fix angeordneter erster Gleitstift (66) beweglich ist, wobei besonders bevorzugt an dem mindestens einen Umfeldsensor (16) ein zweiter Gleitstift (68) fix angeordnet und in der Führungsnut (64) beweglich ist, wobei der zweite Gleitstift (68) von dem ersten Gleitstift (66) beabstandet ist.

8. Dachmodul nach Anspruch 7, **dadurch gekennzeichnet, dass** die Führungsnut (64) einen im Wesentlichen geraden Verlauf aufweist, und damit die Führungsnut entlang ihrer Längserstreckung vorwiegend gerade verläuft, jedoch in einzelnen Teilabschnitten der Führungsnut auch eine leichte Abwinkelung von dem geraden Verlauf aufweisen kann.

9. Dachmodul nach Anspruch 7 oder 8, **dadurch gekennzeichnet, dass** der mindestens eine Verkipphebel (58) in der ausgefahrenen Stellung des mindestens einen Umfeldsensors (16) orthogonal zu der Antriebsachse (30) ausgerichtet ist und derart den mindestens einen Umfeldsensor (16) in der ausgefahrenen Stellung fixiert.

10. Dachmodul nach Anspruch 7, **dadurch gekennzeichnet, dass** sich die Spindelmutter (56) in der eingefahrenen Stellung des mindestens einen Umfeldsensors (16) entlang der Antriebsachse (30) unidirektional in einer Anschlagstellung befindet, so dass der mindestens eine Umfeldsensor zumindest unidirektional entlang der Antriebsachse in der eingefahrenen Stellung fixiert ist, und durch ein äußere Kraft nicht weiter in Richtung der eingefahrenen Stellung bewegt werden kann.

11. Dachmodul nach einem der Ansprüche 1 oder 2 und Anspruch 7, **dadurch gekennzeichnet, dass** der mindestens eine Verkipphebel (58) unmittelbar oder mittelbar mit dem Führungshebel (40) drehbar verbunden ist, wobei der mindestens eine Verkipphebel (58) vorzugsweise mit einer Verriegelungshebelanordnung (74) drehbar verbunden ist, wobei der der mindestens eine Verkipphebel (58) besonders bevorzugt einen ersten Verkipphebelarm (70) und einen zweiten Verkipphebelarm (72) umfasst, der erste Verkipphebelarm (70) drehbar mit der Spindelmutter (56) verbunden ist, der erste Verkipphebelarm (70) relativ zu dem zweiten Verkipphebelarm (72) drehbar mit diesem verbunden ist und der zweite Verkipphebelarm (72) drehbar mit der Verriegelungshebelanordnung (74) verbunden ist.

12. Dachmodul nach Anspruch 11, **dadurch gekennzeichnet, dass** der Führungshebel (40) mit seinem einen Ende drehbar mit dem Dachmodul (10) verbunden ist und mit seinem anderen Ende drehbar mit dem mindestens einen Umfeldsensor (16) verbunden ist und über einen Verbindungshebel (80) drehbar mit der Verriegelungshebelanordnung (74) verbunden ist.

13. Dachmodul nach Anspruch 7, 11 oder 12, **dadurch gekennzeichnet, dass** die Verstellkinematik (18) einen ersten Stabilisierungshebel (84), einen zweiten Stabilisierungshebel (86) und einen dritten Stabilisierungshebel (88) umfasst, der erste Stabilisierungshebel (84) an seinem einen Ende drehbar mit dem Dachmodul (10) verbunden ist und an seinem anderen Ende drehbar mit dem dritten Stabilisierungshebel (88) verbunden ist, der zweite Stabilisierungshebel (86) an seinem einen Ende drehbar mit dem Dachmodul (10) verbunden ist und an seinem anderen Ende drehbar mit dem dritten Stabilisierungshebel (88) verbunden ist und der dritte Stabilisierungshebel (88) an seinem einen Ende drehbar mit dem zweiten Stabilisierungshebel (86) verbunden ist und an seinem anderen Ende drehbar mit dem mindestens einen Umfeldsensor (16) verbunden ist.

14. Dachmodul nach Anspruch 11, **dadurch gekennzeichnet, dass** die Verriegelungshebelanordnung (74) mindestens zwei Verriegelungshebelelemente (76, 78) umfasst, mittels derer der mindestens eine Umfeldsensor (16) in der eingefahrenen Stellung und in der ausgefahrenen Stellung fixierbar ist, so dass der mindestens eine Umfeldsensor (16) jeweils gegenüber einer äußeren Kraft unbeweglich ist.

15. Dachmodul nach Anspruch 11, **dadurch gekennzeichnet, dass** die Verriegelungshebelanordnung (74) über eine Festlagerung (90) drehbar mit dem Dachmodul (10) verbunden ist und der Verkipphebel (58) an seinem einen Ende mit der Spindelmutter (56) drehbar verbunden ist und an seinem gegenüberliegenden Ende mit der Verriegelungshebelanordnung (74), mit einem zweiten Verriegelungshebelelement (78) drehbar verbunden ist, wobei das zweite Verriegelungshebelelement (78) drehbar mit einem Ende eines ersten Verriegelungshebelelements (76) verbunden ist, das an seinem gegenüberliegenden Ende drehbar mit dem mindestens einen Umfeldsensor (16), insbesondere mit dessen Gehäuse (22) drehbar verbunden ist.

## Claims

1. A roof module for forming a vehicle roof (100) of a motor vehicle, the roof module (100) comprising a panel component (12) whose outer surface at least partially forms the roof skin (14) of the vehicle roof (100) and serves as an outer sealing surface of the roof module (10), and at least one environmental sensor (16) by means of which a vehicle environment can be detected during autonomous or semi-autonomous driving of the motor vehicle, and a kinematic system (18) comprising a drive (24) and configured to move the at least one environmental sensor (16) from a retracted position into a deployed position, in which the at least one environmental sensor (16) protrudes beyond the roof skin (14) in order to detect the vehicle environment, and to fix the at least one environmental sensor (16) at least in the deployed position in such a manner that the at least one environmental sensor (16) cannot be moved by an external force, **characterized in that** the kinematic system (18) comprises a guide lever (40) and a slide (28), the slide (28) being movable along a drive axis (30) by means of the drive (24) and comprising a guide slot (32) in which a guide pin (34) is movable, the at least one environmental sensor (16) being displaceable from the retracted position into the deployed position by the movement of the guide pin (34) along the guide slot (32), the guide pin (34) being movable between a first stop of the guide slot (32), which fixes the at least one environmental sensor (16) in the retracted position, and a second stop of the guide slot (32), which fixes the at least one environmental sensor (16) in the deployed position.

2. The roof module according to claim 1, **characterized in that** the guide lever (40) is connected to the roof module (10) in a rotatable manner at one end.

3. The roof module according to claim 1 or 2, **characterized in that** the guide pin (34) is disposed on the guide lever (40) in a fixed manner.

4. The roof module according to any one of claims 1 to 3, **characterized in that** the guide lever (40) and at least one cross lever (42) form a cross lever assembly (40, 42, 44, 46), two lever ends of the cross lever assembly (44, 46) being connected to the at least one environmental sensor (16) in a rotatable manner.

5. The roof module according to any one of claims 2 to 4, **characterized in that** the kinematic system (18) comprises a control lever (50), a first stabilizing lever (48) and a second stabilizing lever (52), the control lever (50) is connected to the first and the second stabilizing lever (48, 52) in a rotatable manner, the guide lever (40) is connected to the first stabilizing lever (48) in a rotatable manner, and the first stabilizing lever (48) and the second stabilizing lever (52) are connected to the at least one environmental sensor (16) in a rotatable manner.

6. The roof module according to claim 1, **characterized in that** the guide pin (34) is disposed on the at least one environmental sensor (16) in a fixed manner.

7. The roof module according to claim 1 or 2, **characterized in that** the kinematic system (18) comprises a spindle nut drive (54) having a spindle nut (56) movable along a drive axis (30), at least one tilting lever (58) by means of which the at least one environmental sensor (16) is displaceable from the retracted position into the deployed position being disposed on the spindle nut (56) in a movable manner, the kinematic system (18) preferably comprising a guide rail (62) having a guide groove (64) in which a first sliding pin (66) disposed on the at least one environmental sensor (16) in a fixed manner is movable, a second sliding pin (68) being particularly preferably disposed on the at least one environmental sensor (16) in a fixed manner and being movable in the guide groove (64), the second sliding pin (68) being spaced apart from the first sliding pin (66).

8. The roof module according to claim 7, **characterized in that** the guide groove (64) is essentially straight, so that the guide groove extends in a mostly straight line along its longitudinal extension, but can also have a slight angle from the straight line in individual sections of the guide groove.

9. The roof module according to claim 7 or 8, **characterized in that** when the at least one environmental sensor (16) is in the deployed position, the at least one tilting lever (58) is oriented orthogonally relative to the drive axis (30), thereby fixing the at least one environmental sensor (16) in the deployed position.

10. The roof module according to claim 7, **characterized in that** when the at least one environmental sensor (16) is in the retracted position, the spindle nut (56) is located in a stop position unidirectionally along the drive axis (30), with the result that the environmental sensor is fixed in the retracted position at least unidirectionally along the drive axis and cannot be moved further in the direction of the retracted position by an external force.

11. The roof module according to any one of claims 1 or 2 and claim 7, **characterized in that** the at least one tilting lever (58) is directly or indirectly connected to the guide lever (40) in a rotatable manner, the at least one tilting lever (58) being preferably connected to a locking lever assembly (74) in a rotatable manner, the at least one tilting lever (58) particularly preferably comprising a first tilting lever arm (70) and a second tilting lever arm (72), the first tilting lever arm (70) being connected to the spindle nut (56) in a rotatable manner, the first tilting lever arm (70) being connected to the second tilting lever arm (72) in such a manner that it is rotatable relative thereto, and the second tilting lever arm (72) being connected to the locking lever assembly (74) in a rotatable manner.

12. The roof module according to claim 11, **characterized in that** one end of the guide lever (40) is connected to the roof module (10) in a rotatable manner and the other end is connected to the at least one environmental sensor (16) in a rotatable manner and the guide lever (40) is connected to the locking lever assembly (74) in a rotatable manner via a connecting lever (80).

13. The roof module according to claim 7, 11 or 12, **characterized in that** the kinematic system (18) comprises a first stabilizing lever (84), a second stabilizing lever (86) and a third stabilizing lever (88), one end of the first stabilizing lever (84) is connected to the roof module (10) in a rotatable manner and the other end is connected to the third stabilizing lever (88) in a rotatable manner, one end of the second stabilizing lever (86) is connected to the roof module (10) in a rotatable manner and the other end is connected to the third stabilizing lever (88) in a rotatable manner, and one end of the third stabilizing lever (88) is connected to the second stabilizing lever (86) in a rotatable manner and the other end is connected to the at least one environmental sensor (16) in a rotatable manner.

14. The roof module according to claim 11, **characterized in that** the locking lever assembly (74) comprises at least two locking lever elements (76, 78) by means of which the at least one environmental sensor (16) is fixable in the retracted position and in the deployed position with the result that the at least one environmental sensor (16) cannot be moved by an external force in either case.

15. The roof module according to claim 11, **characterized in that** the locking lever assembly (74) is connected to the roof module (10) in a rotatable manner via a fixed bearing (90), and the tilting lever (58) is connected to the spindle nut (56) in a rotatable manner at one end and to the locking lever assembly (74), to a second locking lever element (78), in a rotatable manner at its opposite end, the second locking lever element (78) being connected to one end of a first locking lever element (76) in a rotatable manner, the first locking lever element (76) being connected to the at least one environmental sensor (16), in particular to its housing (22), in a rotatable manner at its opposite end.

## Revendications

1. Module de toit destiné à former un toit de véhicule (100) d'un véhicule automobile, le module de toit (100) comprenant un élément de surface (12), dont la surface extérieure forme, au moins en partie, la toiture (14) du toit de véhicule (100) et sert de surface d'étanchéité extérieure du module de toit (10), et au moins un capteur d'environnement (16) configuré pour détecter un environnement du véhicule pendant la conduite autonome ou semi-autonome du véhicule automobile et un système cinématique (18) comprenant un dispositif d'entraînement (24) et configuré pour déplacer l'au moins un capteur d'environnement (16) d'une position rentrée vers une position déployée, dans laquelle l'au moins un capteur d'environnement (16) fait saillie sur la toiture (14) afin de détecter l'environnement du véhicule, et pour fixer l'au moins un capteur d'environnement (16) au moins en position déployée de telle manière que l'au moins un capteur d'environnement (16) ne peut pas être déplacé par une force externe, **caractérisé en ce que** le système cinématique (18) comprend un levier de guidage (40) et un glisseur (28), le glisseur (28) étant déplaçable le long d'un axe d'entraînement (30) au moyen du dispositif d'entraînement (24) et comprenant une coulisse (32) dans laquelle une broche de guidage (34) est déplaçable, l'au moins un capteur d'environnement (16) étant déplaçable de la position rentrée vers la position déployée par le mouvement de la broche de guidage (34) le long de la coulisse (32), la broche de guidage (34) étant déplaçable entre une première butée de la coulisse (32), qui fixe l'au moins un capteur d'environnement (16) en position rentrée, et une deuxième butée de la coulisse (32), qui fixe l'au moins un capteur d'environnement (16) en position déployée.

2. Module de toit selon la revendication 1, **caractérisé en ce que** le levier de guidage (40) est relié au module de toit (10) de manière rotative à une extrémité.

3. Module de toit selon la revendication 1 ou 2, **caractérisé en ce que** la broche de guidage (34) est disposée sur le levier de guidage (40) de manière fixe.

4. Module de toit selon l'une quelconque des revendications 1 à 3, **caractérisé en ce que** le levier de guidage (40) et au moins un levier en croix (42) forment un ensemble de leviers en croix (40, 42, 44, 46), deux extrémités de levier de l'ensemble de leviers en croix (44, 46) étant reliées à l'au moins un capteur d'environnement (16) de manière rotative.

5. Module de toit selon l'une quelconque des revendications 2 à 4, **caractérisé en ce que** le système cinématique (18) comprend une levier de commande (50), un premier levier de stabilisation (48) et un deuxième levier de stabilisation (52), le levier de commande (50) est relié au premier levier de stabilisation (48) et au deuxième levier de stabilisation (52) de manière rotative, le levier de guidage (40) est relié au premier levier de stabilisation (48) de manière rotative et le premier levier de stabilisation (48) et le deuxième levier de stabilisation (52) sont reliés à l'au moins un capteur d'environnement (16) de manière rotative.

6. Module de toit selon la revendication 1, **caractérisé en ce que** la broche de guidage (34) est disposée sur l'au moins un capteur d'environnement (16) de manière fixe.

7. Module de toit selon la revendication 1 ou 2, **caractérisé en ce que** le système cinématique (18) comprend un dispositif d'entraînement à écrou de broche (54) ayant un écrou de broche (56) déplaçable le long d'un axe d'entraînement (30), au moins un levier basculeur (58) configuré pour déplacer l'au moins un capteur d'environnement (16) de la position rentrée vers la position déployée étant disposé sur l'écrou de broche (56) de manière mobile, le système cinématique (18) comprenant de préférence un rail de guidage (62) ayant une rainure de guidage (64) dans laquelle un premier doigt de glissement (66) disposé sur l'au moins un capteur d'environnement (16) de manière fixe est déplaçable, un deuxième doigt de glissement (68) étant disposé de préférence particulière sur l'au moins un capteur d'environnement (16) de manière fixe et étant déplaçable dans la rainure de guidage (64), le deuxième doigt de glissement (68) étant espacé du premier doigt de glissement (66).

8. Module de toit selon la revendication 7, **caractérisé en ce que** la rainure de guidage (64) est essentiellement rectiligne, par quoi la rainure de guidage s'étend en grande partie en ligne droite sur sa longueur, mais peut cependant présenter un léger angle par rapport à la ligne droite sur certaines sections de la rainure de guidage.

9. Module de toit selon la revendication 7 ou 8, **caractérisé en ce que**, lorsque l'au moins un capteur d'environnement (16) se trouve en position déployée, l'au moins un levier basculeur (58) est orienté de manière orthogonale par rapport à l'axe d'entraînement (30), fixant ainsi l'au moins un capteur d'environnement (16) en position déployée.

10. Module de toit selon la revendication 7, **caractérisé en ce que**, lorsque l'au moins un capteur d'environnement (16) se trouve en position rentrée, l'écrou de broche (56) est situé dans une position de butée dans une direction le long de l'axe d'entraînement (30), de sorte que le capteur d'environnement est fixé en position rentrée au moins dans une direction le long de l'axe d'entraînement et ne peut pas être déplacé davantage vers la position rentrée par une force externe.

11. Module de toit selon l'une quelconque des revendications 1 ou 2 et la revendication 7, **caractérisé en ce que** l'au moins un levier basculeur (58) est relié directement ou indirectement au levier de guidage (40) de manière rotative, l'au moins un levier basculeur (58) étant relié de préférence à un ensemble de leviers de verrouillage (74) de manière rotative, l'au moins un levier basculeur (58) comprenant de préférence particulière un premier bras de levier basculeur (70) et un deuxième bras de levier basculeur (72), le premier bras de levier basculeur (70) étant relié à l'écrou de broche (56) de manière rotative, le premier bras de levier basculeur (70) étant relié au deuxième bras de levier basculeur (72) de manière rotative par rapport à celui-ci et le deuxième bras de levier basculeur (72) étant relié à l'ensemble de leviers de verrouillage (74) de manière rotative.

12. Module de toit selon la revendication 11, **caractérisé en ce qu'**une extrémité du levier de guidage (40) est reliée au module de toit (10) de manière rotative et l'autre extrémité est reliée à l'au moins un capteur d'environnement (16) de manière rotative et le levier de guidage (40) est relié à l'ensemble de leviers de verrouillage (74) de manière rotative par l'intermédiaire d'un levier de liaison (80).

13. Module de toit selon la revendication 7, 11 ou 12, **caractérisé en ce que** le système cinématique (18) comprend un premier levier de stabilisation (84), un deuxième levier de stabilisation (86) et un troisième levier de stabilisation (88), une extrémité du premier levier de stabilisation (84) est relié au module de toit (10) de manière rotative et l'autre extrémité est reliée au troisième levier de stabilisation (88) de manière rotative, une extrémité du deuxième levier de stabilisation (86) est reliée au module de toit (10) de manière rotative et l'autre extrémité est reliée au troisième levier de stabilisation (88) de manière rotative et une extrémité du troisième levier de stabilisation (88) est reliée au deuxième levier de stabilisation (86) de manière rotative et l'autre extrémité est reliée à l'au moins un capteur d'environnement (16) de manière rotative.

14. Module de toit selon la revendication 11, **caractérisé en ce que** l'ensemble de leviers de verrouillage (74) comprend au moins deux éléments de levier de verrouillage (76, 78) configurés pour fixer l'au moins un capteur d'environnement (16) en position rentrée et en position déployée de sorte que l'au moins un capteur d'environnement (16) ne puisse pas être déplacé par une force externe à chaque fois.

15. Module de toit selon la revendication 11, **caractérisé en ce que** l'ensemble de leviers de verrouillage (74) est reliée au module de toit (10) de manière rotative par l'intermédiaire d'un palier fixe (90) et le levier basculeur (58) est reliée à l'écrou de broche (56) de manière rotative à une extrémité et à l'ensemble de leviers de verrouillage (74), à un deuxième élément de levier de verrouillage (78), de manière rotative à son extrémité opposée, le deuxième élément de levier de verrouillage (78) étant relié à une extrémité d'un premier élément de levier de verrouillage (76) de manière rotative, le premier élément de levier de verrouillage (76) étant reliée à l'au moins un capteur d'environnement (16), notamment au boîtier (22) de celui-ci, de manière rotative à son extrémité opposée.
